# EUROPEAN PATENT SPECIFICATION

(11) **EP 2 161 313 B1**
(45) Date of publication and mention of the grant of the patent: **07.11.2012**
(21) Application number: 09167867.2
(22) Date of filing: 14.08.2009
(51) Int. Cl.: C09D 11/00, C09D 11/10, G06K 1/00, G06K 19/00

(54) **Machine readable code comprising ultra-violet curable gellant inks**
Ultraviolett härtbare, gelbildende Tinten zur Erzeugung von fühlbarem Text und Bildern für Verpackungsanwendungen
Encres gélifiantes durcissables à ultraviolets pour créer un texte tactile et des images pour les applications de conditionnement

(30) Priority: 04.09.2008 US 204462
(43) Date of publication of application: 10.03.2010
(73) Proprietor: Xerox Corporation, Rochester, NY 14644 (US)
(72) Inventor: Chretien, Michelle, Mississauga Ontario L5M 7J5 (CA); Belelie, Jennifer L., Oakville Ontario L6N 4A5 (CA); Keoshkerian, Barkev, Thornhill Ontario L4J 7E8 (CA); Iftime, Gabriel, Mississauga Ontario L5N 4T1 (CA)
(74) Representative: Grünecker, Kinkeldey, Stockmair & Schwanhäusser

(56) References cited:
- EP-A1- 2 028 240
- US-A- 6 004 419
- US-A1- 2007 142 492
- US-A1- 2008 000 384
- US-A1- 2008 121 727
- US-A1- 2008 122 914
- US-A1- 2008 204 538

## Description

Described herein is a method and code system for embedding information on an object such as paper, card-board, plastic and the like. The process and code system are based on the use of printing markings created with ultra-violet curable gellant phase change inks as described herein, wherein the printed markings are formed to have different heights, which difference in heights can be detected by a reading device. The printed markings of different heights represent different data values, thereby allowing information to be encoded and embedded in a printed image, document, or package. The process and code thus permit information to be covertly embedded in the image, document or package, and does not allow for the information to be readily duplicated by present office equipment such as copiers and scanners. The raised height features comprising the encrypted information encoded on the document or package are printed with ultra-violet curable gellant ink and cured to provide robust code suitable for a wide range of substrates and applications. The encrypted feature can be colored or colorless as desired.

U. S. Patent Publication 20080121727 of Gabriel Iftime et al., published May 29, 2008, entitled "Machine-Readable Code Format" describes a machine readable code comprising a set of printed markings,
wherein each printed marking of the set has a predetermined height on a substrate and represents a predetermined date value, wherein printed markings having a same predetermined height represent a same data value, and wherein printed markings representing different data values have different heights. Also described is a system for embedding and recovering information on a substrate, including an image forming device containing at least one marking material, wherein the image forming device receives data, corresponding to the information, for forming machine readable code on an image receiving substrate, and forms an image including the machine readable code on the image receiving substrate with the at least one marking material, and a document reading device comprising a reader that detects the differences in height among the different printed markings of the machine readable code.

It is estimated that worldwide counterfeiting and piracy costs brand owners over $500 billion every year. As a result, document and product security is of key importance for companies to protect their products and brand against counterfeiting. With the proliferation of digital printing, there is a need to protect printed documents, and document security means are needed to protect products and brands from financial and other losses associated with counterfeiting.

Previously, XEROX® developed the concept of glyphs, wherein information is digitalized onto paper by transforming it into rods of two different orientations. XEROX® DataGlyphs™ technology encodes machine readable data onto paper documents or other physical media. DataGlyphs™ encode information into thousands of tiny, individual glyph elements. Each element consists of a small 45 degree diagonal line, as short as 1/100th of an inch or less, depending on the resolution of the printing and scanning that is used. Each one represents a single binary 0 or 1, depending on whether it slopes to the left or right. Sequences of these can be used to encode numeric, textual or other information. The individual glyphs are grouped together on the page, where they form unobtrusive, evenly textured gray areas, like half-toned pictures. One of the reasons for using diagonal glyph elements is because research has shown that the patterns that they form when massed together are not visually distracting. DataGlyph™ technology allows ordinary business documents to carry thousands of characters of information hidden in these unobtrusive gray patterns that can appear as backgrounds, shading patterns or conventional graphic design elements. Often, their presence will go completely unnoticed. For example, the entire Gettysburg Address will fit in a DataGlyph™ about the size of a small US postage stamp. DataGlyph™ areas can be printed on a document as part of its normal printing process. The information to be put in the DataGlyphs™ is encoded as a sequence of individual glyphs, and these can be printed either directly by the encoding software (for instance, by computer laser printer) or via a conventional printing process, such as offset. The glyphs are laid down on a finely spaced rectangular grid so that the area is evenly textured. In addition, each glyph area contains an embedded synchronization lattice or "skeleton" -- a repeating, fixed pattern of glyphs which marks the boundaries of the glyph area and serves as a clocking track to improve the reliability of reading. Before data is placed into the synchronization frame, it's grouped into blocks of a few dozen bytes and error correcting code is added to each block. The amount of error correction to be used is chosen by the application, depending on the expected quality of the print-scan cycle. Higher levels of error correction increase the size of the glyph area needed for a given amount of data, but improve the reliability with which the data can be read back. This feature can be very important in environments where there is a high level of image noise (for example, fax) or where the documents are subjected to rough handling. As a final step, the bytes of data are randomly dispersed across the glyph area, so that if any part of the glyph area on the paper is severely damaged, the damage to any individual block of data will be slight, and thus easy for the error correcting code to recover. Together, error correction and randomization provide very high levels of reliability, even when the glyph area is impaired by ink marks, staples and other kinds of image damage.

There remains a need for new technologies, systems and process for embedding and recovering information on an object for security and/or verification or authentication applications. Further, there is a need for systems and processes that enable the placement of encoded information on documents, overtly or covertly, that is machine readable and not easily reproduced by office equipment such as copiers and scanners.

US-A-2007/142492 discloses a method for forming an image, said method comprising:
applying a radiation-curable ink to a substrate in an imagewise manner, wherein the radiation-curable ink comprises a curable monomer or oligomer, a curable wax, a colorant and at least one initiator; and
exposing the radiation-curable ink to radiation to cure the ink.

US-A-2008/000384 discloses a method of forming an image, comprising:
melting a radiation-curable phase change ink comprising an ink vehicle that includes at least one radiation-curable carrier, at least one gellant, at least one radiation-curable wax and at least one photoinitiator;
jetting the radiation-curable phase change ink onto an image receiving substrate, wherein the radiation-curable phase change ink forms a gel state;
exposing the radiation-curable phase change ink on the image receiving substrate to ultraviolet light to cure the curable components of the radiation-curable phase change ink.

US-A-2008/122914 relates to a radiation-curable phase change ink vehicle having improved gellant solubility, the ink vehicle comprising:
at least a first comonomer,
at least a second comonomer that is different from the first comonomer, and
at least one gellant comprising a curable epoxy polyamide composite gellant;
wherein the first comonomer and the second comonomer are radiation-curable monomers.

EP-A-2028240 discloses a process comprising (I) incorporating into an ink-jet printing apparatus radiation-curable phase change ink comprising a white colorant; a colorant dispersant; and an ink vehicle comprising at least one curable monomer; and at least one rheology control agent; (II) melting the ink; (III) causing droplets of the melted ink to be ejected in an imagewise pattern onto a substrate; and (IV) exposing the imagewise pattern to ultraviolet radiation.

US-A-2008/204538 discloses a method for forming an image onto a corrugated substrate comprising:
melting a radiation-curable gel based phase changed ink;
depositing at least one drop of the melted ink on the corrugated substrate in a pattern to form an image;
allowing the ink to gel on the substrate; and
curing the ink.

US patent 6,004,419 relates to a process for producing raised images, in particular raised letters for the blind.

US-A-2008/0121727 relates to a machine readable code comprising a set of printed markings, wherein each printed marking of the set has a predetermined height on a substrate and represents a predetermined data value, wherein the set of printed markings includes printed markings representing different data values and having different print heights.

Disclosed herein is machine readable code comprising a set of printed markings printed with an ultra-violet curable gellant ink comprising an optional colorant and a phase change ink vehicle comprising at least one radiation curable monomer or prepolymer, a photoinitiator, a reactive wax, and a gellant, wherein each printed marking of the set has a predetermined height on a substrate and represents a predetermined data value, wherein printed markings having a same predetermined height represent a same data value, and wherein printed markings representing different data values have different heights.

Also provided is a substrate having machine readable code disposed thereon, wherein the code comprises a set of printed markings printed with an ultra-violet curable gellant ink comprising an optional colorant and a phase change ink vehicle comprising at least one radiation curable monomer or prepolymer, a photoinitiator, a reactive wax, and a gellant, wherein each printed marking of the set has a predetermined height on a substrate and represents a predetermined data value, wherein printed markings having a same predetermined height represent a same data value, and wherein printed markings representing different data values have different heights.

Also provided is a system for embedding and recovering information on a substrate, comprising an image forming device containing at least one marking material comprising an ultra-violet curable gellant ink comprising an optional colorant and a phase change ink vehicle comprising at least one radiation curable monomer or prepolymer, a photoinitiator, a reactive wax, and a gellant, wherein the image forming device receives data, corresponding to the information, for forming the machine readable code as indicated above on an image receiving substrate, and forms an image including the machine readable code on the image receiving substrate with the at least one ultra-violet curable gellant phase change ink marking material as described herein; and a document reading device comprising a reader that detects the differences in height among the different printed markings of the machine readable code.

In further embodiments, also provided is a method for embedding information on a substrate comprising converting the information to machine readable code, wherein the code comprises a set of intended printed markings, wherein each intended printed marking of the set has a predetermined height on a substrate and represents a predetermined data value, wherein intended printed markings having a same predetermined height represent a same data value, and wherein intended printed markings representing different data values have different heights; and printing the machine readable code on the substrate with ultra-violet curable gellant ink comprising an optional colorant and a phase change ink vehicle comprising at least one radiation curable monomer or prepolymer, a photoinitiator, a reactive wax, and a gellant such that each of the intended printed markings is formed as a printed marking with the predetermined height.
Fig. 1 is an example of machine readable code in bar code form in which printed marks or bars of different heights represent different data values from 0 to 9 (0 to 3 are shown).
Figure 2 is an example of machine readable code in binary code form in which printed marks or bars of different heights represent different data values of 0 or 1.
Figure 3 is an example of a two-dimensional Data Matrix code consisting of black and white squares arranged in a pattern encrypting a message.
Figure 4A is a portion of the two-dimensional Data Matrix code of Figure 3.
Figure 4B is an alternate view of the portion of the two-dimensional Data Matrix code shown in Figure 3.
Figure 4C is an example of a three-dimensional Data Matrix style code in accordance with an embodiment herein.
Figure 5 is an illustration of free-standing structures prepared in accordance with the present disclosure.

Any suitable or desired machine readable code format can be selected in embodiments herein including one-dimensional symbologies such as bar codes, two-dimensional symbologies such as stacked bar codes, matrix codes, codes such as PDF417, and the like. The code can be in binary form, for example encoding Os and 1 s, or can be in other forms, for example encoding each value from 0 to 9. The printed markings of the machine readable code set thus can take any suitable form, for example including, but not limited to, rods or strips as in bar codes, dots, glyphs, and the like.

The machine readable code thus comprises a set of printed markings, wherein each printed marking of the set has a predetermined print height on a substrate and represents a predetermined data value, wherein the set of printed markings includes printed markings representing different data values and having different print heights.

Encrypted information can be printed on a substrate by using variable height marking material comprising an ultra-violet curable gellant ink comprising an optional colorant and a phase change ink vehicle comprising at least one radiation curable monomer or prepolymer, a photoinitiator, a reactive wax, and a gellant. The different print heights can be recognized and distinguished by a reader and thus the different print heights can be used to encode different digital data values.

In embodiments, the different predetermined print heights for each of the different printed markings differ from each other by from 3 micrometers (µm) to 100 µm, such as from 3 µm to 50 µm, or from 3 µm to 25 µm. Print height refers to, for example, the height of the printed mark as determined from the base of the substrate upon which the printed mark is formed to the top portion of the printed mark where the mark is detected and read by a reading device. The printed heights can also differ by more than 100 µm, but the height differential may become visible to the naked eye or to the touch. On the other hand, print height differentials of 1 µm or less may be too difficult for a reading machine to consistently accurately detect as representing different data values. Thus, in embodiments, the tolerance of a reading device may be set such that printed markings having a printed height that is within ± 1 µm of each other are considered to have a same predetermined height or to represent a same data value.

In embodiments, the machine readable code may be written using a set of printed markings having a different height associated with each printed marking and representing different single digit numbers from 0 to 9. For example, the machine readable code may be a bar code and the set of printed markings may include two to ten printed markings of different predetermined heights. In embodiments, the set of printed markings may include ten different printed markings of different predetermined heights, and wherein each of the ten different printed markings represents one of the data values selected from 0, 1, 2, 3, 4, 5, 6, 7, 8 and 9.

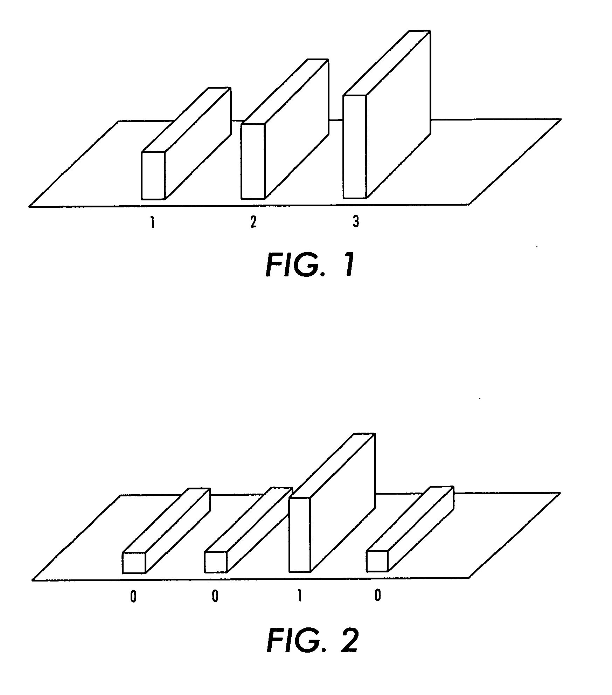

As example of such a printed marking set is partially shown in Figure 1. As shown in Figure 1, raised bar code is created in such a way that each number from 0 to 9 has an assigned print height. For example, 0 may be assigned a print height of 8 µm, 1 a print height of 16 µm, 3 a print height of 24 µm, and so on up to 9.

Of course, this assigning of data values of from 0 to 9 can be used with other printed marking forms and is not limited to bar codes.

In further embodiments, binary based digital encoding can be created by having Os and 1 s made of printed markings having different print heights. An example of such a printed marking set is shown in Figure 2. In this embodiment, encrypted digital information is created using two different print heights. For example, Os can be assigned a print height of 10 µm and 1 s can be assigned a print height of 20 µm.

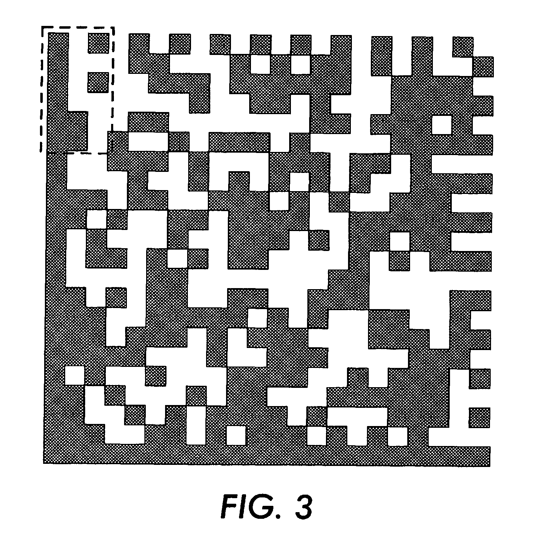

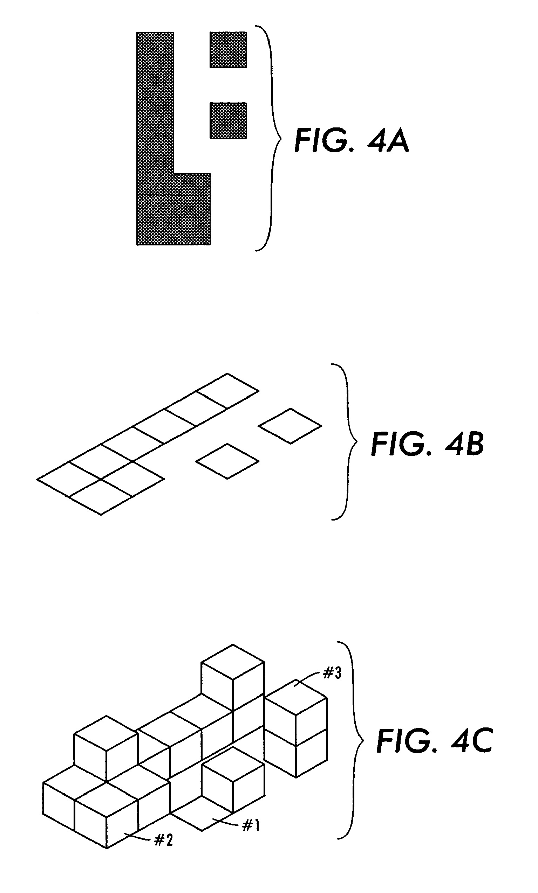

The amount of encryptable information is limited only by the resolution of the printer selected. In embodiments, the amount of information printed on a given surface unit can be increased without increasing the print resolution by varying the print height, such as by three-dimensional printing. For example, a two-dimensional Data Matrix code uses the x, y dimension on the paper surface to encrypt information comprising a series of printed black and white squares. Two-dimensional code functions as an independent and portable database, and therefore assures complete portability for the two-dimensional labeled items. However, the amount of information that can be contained in a two-dimensional bar code is limited to about 1200 characters. An example of a two-dimensional Data Matrix encoded message is shown in Figure 3, wherein the message encrypted is "Xerox Research Centre of Canada." In embodiments herein, the concept of raised print is employed to enable use of print height (z dimension) in addition to the x, y dimensions. For example, some of the printed black squares can have a height z = 1 while others can have a height z = 2 as shown in Figure 4. Figure 4A illustrates a portion of the code enclosed in the dotted lines of Figure 3. Figure 4B illustrates the footprint wherein z = 0 for the portion of the code enclosed in the dotted lines. Figure 4C illustrates an embodiment herein where selected areas have a height which is either z = 1 or z = 2 thus providing an additional dimension for encoding information on the same footprint. For example, the arrow extending from number 1 in Figure 4C references a portion of the code having a height that is zero (non raised print area). The arrow extending from number 2 in Figure 4C references a portion of the code having a first height, z = 1, and the arrow extending from number 3 in Figure 4C references a portion of the code having a second height that is greater than the first height, z = 2. The three-dimensional code printed with the ultra-violet curable gellant phase change inks herein can function as a two-dimensional code by using the combinations shown in Figures 4A and 4B. In embodiments herein, a combination of print heights as shown in Figure 4C can be used to dispose a greater quantity of information on a given surface area without increasing the overall footprint. In either application, dot size is limited only by the printer resolution. The disclosure herein enables large amounts of digital data to be added to each document or package, etc.

The encrypted digital information can be retrieved using an optical or electronic reader capable of distinguishing the various heights. After the height signal has been recorded, software can be used to translate the information to a readable format.

In embodiments, the code format can be comprised of a self-clocking glyph code as disclosed in, for example, U. S. Patent Numbers 5,128,525 and 5,168,147. Data can be encoded in the shape of the glyphs, the rotation of the glyphs, or in any other desired variation.

In embodiments, the glyphs are elliptical marks, and in a simple code wherein two distinct shapes are possible, the glyphs preferably are elliptical marks rotated from the vertical at either about + 45° (for example, "/") or about -45° (for example "\"). The use of orthogonally-oriented marks potentially allows for a large degree of discrimination between data bit 1 and data bit 0. The marks may be inclined at about 45°, rather than being horizontal or vertical, because (a) there is less tendency for adjacent marks to touch, (b) the eye is less sensitive to diagonal lines than to vertical or horizontal lines, and (c) printing and scanning nonuniformities tend to be horizontal (banding) or vertical (photodetector array response variations). In an embodiment, the two glyphs may each be elongated multi-pixel symbols having the same number of adjacent "ON" pixels and differ from each other in their rotation from the vertical. These specific glyphs are readily discernible from each other, even in the presence of significant distortion and image degradation, because they do not tend to degrade into a common shape.

In embodiments, the different glyph markings not only have different orientations, but also different printed heights. By employing different heights for the glyph markings, an advantage is that the capacity for encrypting and storing information can be significantly increased, and that two different mechanisms for encryption are used. First is the glyph orientation (for example, left or right) discussed above. Second is the different printed heights of the glyphs, as described above. This property provides for four different states that can be used as a mechanism of encrypting more information on the same surface area of a substrate. With conventional same height glyphs, one uses only the first mechanism (glyph orientation), which provides only two states. The four states achievable when using printed glyphs of different heights to form the glyphs may be as follows: (1) oriented right/first height (binary code 00), (2) oriented right/different second height (binary code 01), (3) oriented left/first or second height, or a different third height (binary code 11), and (4) oriented left/second or first height, or a different fourth height (binary code 11). Thus, in embodiments, the machine readable code format comprises a set of four glyphs, wherein each glyph corresponds to a different digital value selected from the group consisting of 00, 01, 10 and 11, and wherein the fourth glyphs comprise one of two different orientations and one of four different heights.

The printed markings may have a very small width and/or diameter, for example limited only by the resolution of the image forming device. An average width or diameter of the printed markings may be from, for example, 10 µm to 1,000 µm, for example from 1000 µm to 100 µm, or from 40 µm to 100 µm.

The printed markings have an advantage in that as a result of the different print heights of the markings, even when the printed markings are formed using a marking material (ink) including a visible colorant therein, the encrypted code cannot be copied or reproduced by today's office equipment such as copiers and scanners. Moreover, persons attempting to counterfeit or copy the item having the encrypted code thereon typically will not be able to discern the height differential in the printed markings. As a result, photocopied items may replicate the viewable code pattern, but will lack the height differential so that the item can be readily detected as a fake.

In addition, the printed marking may be formed using substantially colorless/clear inks. This feature adds a still further security feature in that photocopies and scans of the image will not include the security markings at all, and a forger may not even know of the existence of the security markings in the image. The reading device, however, can still detect the security markings and discern the height differentials, so that the encrypted information can be recovered. In addition, the use of substantially colorless marking materials allows for the possibility that the security markings may be located over a regular printed image, since the substantially colorless marking material will not interfere with the desired regular image.

The use of the raised printed markings, which can be of a very small size as limited only by the resolution of the image forming device used, enables a greater amount of information to be printed in a smaller region. This feature is also beneficial with respect to recovering encrypted information in damaged documents. That is, in recovering information from damaged documents, there is a significantly higher proportion of the document that can be recovered when compared with current encryption technology, for example because the small size of the printed markings permit a larger amount of information to be stored via encryption. Thus, the amount of information to be stored via encryption. Thus, the amount of duplicate information (overprotection) written into the document can be increased compared with conventional glyphs.

The printed markings can be formed on any desired image receiving substrate. Examples include, but are not limited to, plain papers such as XEROX® 4024 papers, XEROX® Image Series papers, Courtland 4024 DP paper, ruled notebook paper, bond paper, silica coated papers such as Sharp Company silica coated paper, JuJo paper, HAMMERMILL LASERPRINT® paper, and the like, glossy coated papers such as XEROX® Digital Color Gloss, Sappi Warren Papers LUSTROGLOSS®, and the like, transparency materials, fabrics, textile products, packaging materials such as plastics, polymeric films, foils, and foil coated plastics and papers as well as inorganic substrates such as metals and wood, and the like.

In specific embodiments herein, the marking material comprises an ultra-violet curable phase change ink composition comprising an optional colorant and a phase change in vehicle comprising at least one radiation curable monomer or prepolymer; a photoinitiator; a reactive wax; and a gellant. The gel nature of the material at room temperature prevents spread or migration of the printed droplet and enables facile formation of the raised encryption features. Further, both normal print and raised features can be generated on the same document using the same ink. The cured inks are extremely robust materials and are compatible with a wide variety of substrates. The present inks enable production of printed structures having a height that can be varied widely.

The colorant may be present in a colored marking material in any desired amount, for example from 0.5 to 75% by weight of the marking material, for example from 1 to 50% or from 1 to 25%, by weight of the marking material.

As colorants, examples may include any dye or pigment capable of being dispersed or dissolved in the vehicle.

The radiation curable phase change gellant inks herein can be cured after deposition of each layer in a raised height image if desired. Alternately, in the interest of time, the inks can be cured upon completion of deposition of all layers of the raised height image. Of course, if a regular image is created, the inks can be cured after deposition of the regular image.

In specific embodiments, the ink vehicles disclosed herein can comprise any suitable curable monomer or prepolymer. Examples of suitable materials include radiation curable monomer compounds, such as acrylate and methacrylate monomer compounds, which are suitable for use as phase change ink carriers. Specific examples of relatively nonpolar acrylate and methacrylate monomers include (but are not limited to) isobornyl acrylate, isobornyl methacrylate, lauryl acrylate, lauryl methacrylate, isodecylacrylate, isodecylmethacrylate, caprolactone acrylate, 2-phenoxyethyl acrylate, isooctylacrylate, isooctylmethacrylate, butyl acrylate, and the like, as well as mixtures and combinations thereof. In addition, multifunctional acrylate and methacrylate monomers and oligomers can be included in the phase change ink carrier as reactive diluents and as materials that can increase the crosslink density of the cured image, thereby enhancing the toughness of the cured images. Examples of suitable multifunctional acrylate and methacrylate monomers and oligomers include (but are not limited to) pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecanol diacrylate, 1,12-dodecanol dimethacrylate, tris(2-hydroxy ethyl) isocyanurate triacrylate, propoxylated neopentyl glycol diacrylate (available from Sartomer Co. Inc. as SR 9003), hexanediol diacrylate, tripropylene glycol diacrylate, dipropylene glycol diacrylate, amine modified polyether acrylates (available as PO 83 F, LR 8869, and/or LR 8889 (all available from BASF Corporation), trimethylolpropane triacrylate, glycerol propoxylate triacrylate, dipentaerythritol pentaacrylate, dipentaerythritol hexaacrylate, ethoxylated pentaerythritol tetraacrylate (available from Sartomer Co. Inc. as SR 494), and the like, as well as mixtures and combinations thereof. When a reactive diluent is added to the ink carrier material, the reactive diluent is added in any desired or effective amount, in one embodiment at least 1 percent by weight of the carrier, and in another embodiment at least 35 percent by weight of the carrier, and in one embodiment no more than 80 percent by weight of the carrier, and in another embodiment no more than 70 percent by weight of the carrier, although the amount of diluent can be outside of these ranges.

In embodiments, the ink vehicles contain at least one compound that can exhibit gel-like behavior in that it undergoes a relatively sharp increase in viscosity over a relatively narrow temperature range when dissolved in a liquid such as those compounds that behave as curable monomers when exposed to radiation such as ultraviolet light. One example of such a liquid curable monomer is a propoxylated neopentyl glycol diacrylate such as SR9003, commercially available from Sartomer Co. Inc.

In one embodiment, some compounds as disclosed herein undergo a change in viscosity of at least 10³ centipoise, in another embodiment at least 10⁵ centipoise, and in yet another embodiment at least 10⁶ centipoise over a temperature range of in one embodiment at least 30°C, in another embodiment at least 10°C, and in yet another embodiment at least 5°C, although the viscosity change and temperature range can be outside of these ranges, and compounds that do not undergo changes within these ranges are also included herein.

At least some embodiments of the compounds disclosed herein can form a semi-solid gel at a first temperature. For example, when the compound is incorporated into a phase change ink, this temperature is below the specific temperature at which the ink is jetted. The semi-solid gel phase is a physical gel that exists as a dynamic equilibrium comprising one or more solid gellant molecules and a liquid solvent. The semi-solid gel phase is a dynamic networked assembly of molecular components held together by non-covalent interactions such as hydrogen bonding, Van der Waals interactions, aromatic non-bonding interactions, ionic or coordination bonding, London dispersion forces, or the like, which, upon stimulation by physical forces, such as temperature, mechanical agitation, or the like, or chemical forces, such as pH, ionic strength, or the like, can undergo reversible transitions from liquid to semi-solid state at the macroscopic level. The solutions containing the gellant molecules exhibit a thermally reversible transition between the semi-solid gel state and the liquid state when the temperature is varied above or below the gel point of the solution. This reversible cycle of transitioning between semi-solid gel phase and liquid phase can be repeated many times in the solution formulation.

In specific embodiments, the ink vehicles disclosed herein can comprise any suitable photoinitiator. Examples of specific initiators include, but are not limited to, Irgacure® 127, Irgacure® 379, Irgacure® 819, all commercially available from Ciba Specialty Chemicals, among others. Further examples of suitable initiators include (but are not limited to) benzophenones, benzyl ketones, α-alkoxy benzyl ketones, monomeric hydroxyl ketones, polymeric hydroxyl ketones, α-amino ketones, acyl phosphine oxides, metallocenes, benzoin ethers, benzil ketals, α-hydroxyalkylphenones, α-aminoalkylphenones, acylphosphine photoinitiators sold under the trade designations of IRGACURE and DAROCUR from Ciba, and the like. Specific examples include 1-hydroxy-cyclohexylphenylketone, benzophenone, 2-benzyl-2-(dimethylamino)-1-(4-(4-morphorlinyl)phenyl)-1-butanone, 2-methyl-1-(4-methylthio)phenyl-2-(4-morphorlinyl)-1-propanone, diphenyl-(2,4,6-trimethylbenzoyl) phosphine oxide, phenyl bis(2,4,6-trimethylbenzoyl) phosphine oxide, benzyl-dimethylketal, isopropylthioxanthone, 2,4,6-trimethylbenzoyldiphenylphosphine oxide (available as BASF LUCIRIN TPO), 2,4,6-trimethylbenzoylethoxyphenylphosphine oxide (available as BASF LUCIRIN TPO-L), bis(2,4,6-trimethylbenzoyl)-phenyl-phosphine oxide (available as Ciba IRGACURE 819) and other acyl phosphines, 2-methyl-1-(4-methylthio)phenyl-2-(4-morphorlinyl)-1-propanone (available as Ciba IRGACURE 907) and 1-(4-(2-hydroxyethoxy)phenyl)-2-hydroxy-2-methylpropan-1-one (available as Ciba IRGACURE 2959), 2-benzyl 2-dimethylamino 1-(4-morpholinophenyl) butanone-1 (available as Ciba IRGACURE 369), 2-hydroxy-1-(4-(4-(2-hydroxy-2-methylpropionyl)-benzyl)-phenyl)-2-methylpropan-1-one (available as Ciba IRGACURE 127), 2-dimethylamino-2-(4-methylbenzyl)-1-(4-morpholin-4-ylphenyl)-butanone (available as Ciba IRGACURE 379), titanocenes, isopropylthioxanthone, 1-hydroxy-cyclohexylphenylketone, benzophenone, 2,4,6-trimethylbenzophenone, 4-methylbenzophenone, diphenyl-(2,4,6-trimethylbenzoyl) phosphine oxide, 2,4,6-trimethylbenzoylphenylphosphinic acid ethyl ester, oligo(2-hydroxy-2-methyl-1-(4-(1-methylvinyl)phenyl) propanone), 2-hydroxy-2-methyl-1-phenyl-1-propanone, benzyl-dimethylketal, and the like, as well as mixtures thereof.

Optionally, the phase change inks can also contain an amine synergist, which are co-initiators which can donate a hydrogen atom to a photoinitiator and thereby form a radical species that initiates polymerization, and can also consume dissolved oxygen, which inhibits free-radical polymerization, thereby increasing the speed of polymerization. Examples of suitable amine synergists include (but are not limited to) ethyl-4-dimethylaminobenzoate, 2-ethylhexyl-4-dimethylaminobenzoate, and the like, as well as mixtures thereof.

Initiators for inks disclosed herein can absorb radiation at any desired or effective wavelength, in one embodiment at least 200 nanometers, and in one embodiment no more than 560 nanometers, and in another embodiment no more than 420 nanometers, although the wavelength can be outside of these ranges.

Optionally, the photoinitiator is present in the phase change ink in any desired or effective amount, in one embodiment at least 0.5 percent by weight of the ink composition, and in another embodiment at least 1 percent by weight of the ink composition, and in one embodiment no more than 15 percent by weight of the ink composition, and in another embodiment no more than 10 percent by weight of the ink composition, although the amount can be outside of these ranges.

Any suitable reactive wax can be used for the phase change in vehicles disclosed herein. In embodiments, the reactive wax comprises a curable wax component that is miscible with the other components and that will polymerize with the curable monomer to form a polymer. Inclusion of the wax promotes an increase in viscosity of the ink as it cools from the jetting temperature.

In embodiments, the reactive wax is a hydroxyl-terminated polyethylene wax functionalized with a polymerizable group. Suitable examples of waxes include, but are not limited to, those that are functionalized with curable groups. The curable groups may include, but are not limited to, acrylate, methacrylate, alkene, allylic ether, epoxide and oxetane. These waxes can be synthesized by the reaction of a wax equipped with a transformable functional group, such as carboxylic acid or hydroxyl.

Suitable examples of hydroxyl-terminated polyethylene waxes that may be functionalized with a curable group include, but are not limited to, mixtures of carbon chains with the structure CH₃-(CH₂)ₙ-CH₂OH, where there is a mixture of chain lengths, n, where the average chain length is in selected embodiments in the range of 16 to 50, and linear low molecular weight polyethylene, of similar average chain length. Suitable examples of such waxes include, but are not limited to, UNILIN® 350, UNILIN® 425, UNILIN® 550 and UNILIN® 700 with Mn approximately equal to 375, 460, 550 and 700 g/mol, respectively. All of these waxes are commercially available from Baker-Petrolite. Guerbet alcohols, characterized as 2,2-dialkyl-1-ethanols, are also suitable compounds. Specific embodiments of Guerbet alcohols include those containing 16 to 36 carbons, many of which are commercially available from Jarchem Industries Inc., Newark, NJ. In embodiments, PRIPOL® 2033 is selected, PRIPOL® 2033 being a C-36 dimer diol mixture including isomers of the formula 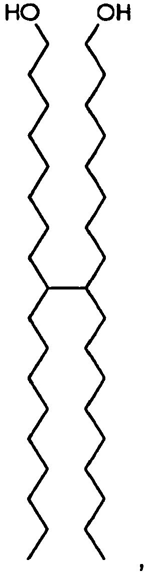 as well as other branched isomers which may include unsaturations and cyclic groups, available from Uniqema, New Castle, DE. Further information on C36 dimer diols of this type is disclosed in, for example, "Dimer Acids," Kirk-Othmer Encyclopedia of Chemical Technology, Vol. 8, 4th Ed. (1992), pp. 223 to 237. These alcohols can be reacted with carboxylic acids equipped with UV curable moieties to form reactive esters. Examples of these acids include, but are not limited to, acrylic and methacrylic acids, available from Sigma-Aldrich Co. Specific curable monomers include acrylates of UNILIN® 350, UNILIN® 425, UNILIN® 550 and UNILIN® 700.

Suitable examples of carboxylic acid-terminated polyethylene waxes that may be functionalized with a curable group include, but are not limited to, mixtures of carbon chains with the structure CH₃-(CH₂)ₙ-COOH, where there is a mixture of chain lengths, n, where the average chain length is in selected embodiments in the range of 16 to 50, and linear low molecular weight polyethylene, of similar average chain length. Suitable examples of such waxes include, but are not limited to, UNICID® 350, UNICID® 425, UNICID® 550 and UNICID® 700 with Mn equal to approximately 390, 475, 565 and 720 g/mol, respectively. Other suitable waxes have a structure CH₃-(CH₂)ₙ-COOH, such as hexadecanoic or palmitic acid with n=14, heptadecanoic or margaric or daturic acid with n=15, octadecanoic or stearic acid with n=16, eicosanoic or arachidic acid with n=18, docosanoic or behenic acid with n=20, tetracosanoic or lignoceric acid with n=22, hexacosanoic or cerotic acid with n=24, heptacosanoic or carboceric acid with n=25, octacosanoic or montanic acid with n=26, triacontanoic or melissic acid with n=28, dotriacontanoic or lacceroic acid with n=30, tritriacontanoic or ceromelissic or psyllic acid, with n=31, tetratriacontanoic or geddic acid with n=32, pentatriacontanoic or ceroplastic acid with n=33. Guerbet acids, characterized as 2,2-dialkyl ethanoic acids, are also suitable compounds. Selected Guerbet acids include those containing 16 to 36 carbons, many of which are commercially available from Jarchem Industries Inc., Newark, NJ. PRIPOL® 1009 (C-36 dimer acid mixture including isomers of the formula 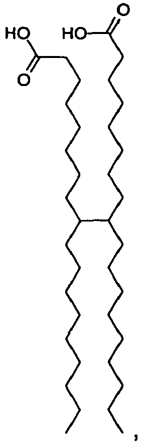 as well as other branched isomers which may include unsaturations and cyclic groups, available from Uniqema, New Castle, DE; further information on C36 dimer acids of this type is disclosed in, for example, "Dimer Acids," Kirk-Othmer Encyclopedia of Chemical Technology, Vol. 8, 4th Ed. (1992), pp. 223 to 237) can also be used. These carboxylic acids can be reacted with alcohols equipped with UV curable moieties to form reactive esters. Examples of these alcohols include, but are not limited to, 2-allyloxyethanol from Sigma-Aldrich Co.; 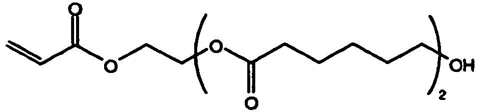 SR495B from Sartomer Company, Inc.; 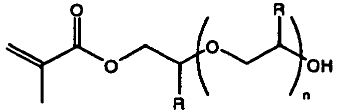 CD572 (R = H, n = 10) and SR604 (R = Me, n = 4) from Sartomer Company, Inc.

In embodiments, the optional curable wax is included in the ink in an amount of from, for example, 1 to 25% by weight of the ink, or from 2 to 20% by weight of the ink, or from 2.5 to 15% by weight of the ink, although the amounts can be outside of these ranges.

The curable monomer or prepolymer and curable wax together can form more than 50% by weight of the ink, or at least 70% by weight of the ink, or at least 80% by weight of the ink, although not limited.

Any suitable gellant can be used for the ink vehicles disclosed herein. In embodiments, a gellant such as described in U. S. Patent Application Serial No. 11/290,202, filed November 30, 2005, entitled "Phase Change Inks Containing Photoinitiator With Phase Change Properties and Gellant Affinity," with the named inventors Peter G. Odell, Eniko Toma, and Jennifer L. Belelie, can be used, wherein the gellant is a compound of the formula 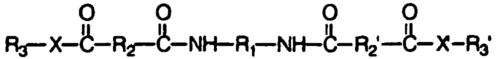 wherein R₁ is:
(i) an alkylene group (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), in one embodiment with at least 1 carbon atom, and in one embodiment with no more than 12 carbon atoms, in another embodiment with no more than 4 carbon atoms, and in yet another embodiment with no more than 2 carbon atoms, although the number of carbon atoms can be outside of these ranges,
(ii) an arylene group (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), in one embodiment with at least 5 carbon atoms, and in another embodiment with at least 6 carbon atoms, and in one embodiment with no more than 14 carbon atoms, in another embodiment with no more than 10 carbon atoms, and in yet another embodiment with no more than 6 carbon atoms, although the number of carbon atoms can be outside of these ranges,
(iii) an arylalkylene group (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), in one embodiment with at least 6 carbon atoms, and in another embodiment with at least 7 carbon atoms, and in one embodiment with no more than about 32 carbon atoms, in another embodiment with no more than 22 carbon atoms, and in yet another embodiment with no more than 7 carbon atoms, although the number of carbon atoms can be outside of these ranges, or
(iv) an alkylarylene group (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, wherein the substituents on the substituted alkylene, arylene, arylalkylene, and alkylarylene groups can be (but are not limited to) halogen atoms, cyano groups, pyridine groups, pyridinium groups, ether groups, aldehyde groups, ketone groups, ester groups, amide groups, carbonyl groups, thiocarbonyl groups, sulfide groups, nitro groups, nitroso groups, acyl groups, azo groups, urethane groups, urea groups, mixtures thereof, and the like, wherein two or more substituents can be joined together to form a ring;
R₂ and R₂ each, independently of the other, are:
(i) alkylene groups (wherein an alkylene group is defined as a divalent aliphatic group or alkyl group, including linear and branched, saturated and unsaturated, cyclic and acyclic, and substituted and unsubstituted alkylene groups, and wherein heteroatoms, such as oxygen, nitrogen, sulfur, silicon, phosphorus, boron, and the like either may or may not be present in the alkylene group), in one embodiment with at least 1 carbon atom, and in one embodiment with no more than 54 carbon atoms, and in another embodiment with no more than 36 carbon atoms, although the number of carbon atoms can be outside of these ranges,
(ii) arylene groups (wherein an arylene group is defined as a divalent aromatic group or aryl group, including substituted and unsubstituted arylene groups, and wherein heteroatoms, such as oxygen, nitrogen, sulfur, silicon, phosphorus, boron, and the like either may or may not be present in the arylene group), in one embodiment with at least 5 carbon atoms, and in another embodiment with at least 6 carbon atoms, and in one embodiment with no more than 14 carbon atoms, in another embodiment with no more than 10 carbon atoms, and in yet another embodiment with no more than 7 carbon atoms, although the number of carbon atoms can be outside of these ranges,
(iii) arylalkylene groups (wherein an arylalkylene group is defined as a divalent arylalkyl group, including substituted and unsubstituted arylalkylene groups, wherein the alkyl portion of the arylalkylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 8 carbon atoms, although the number of carbon atoms can be outside of these ranges, or
(iv) alkylarylene groups (wherein an alkylarylene group is defined as a divalent alkylaryl group, including substituted and unsubstituted alkylarylene groups, wherein the alkyl portion of the alkylarylene group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylarylene group), in one embodiment with at least 6 carbon atoms, and in another embodiment with at least 7 carbon atoms, and in one embodiment with no more than 32 carbon atoms, in another embodiment with no more than 22 carbon atoms, and in yet another embodiment with no more than 7 carbon atoms, although the number of carbon atoms can be outside of these ranges, wherein the substituents on the substituted alkylene, arylene, arylalkylene, and alkylarylene groups can be (but are not limited to) halogen atoms, cyano groups, ether groups, aldehyde groups, ketone groups, ester groups, amide groups, carbonyl groups, thiocarbonyl groups, phosphine groups, phosphonium groups, phosphate groups, nitrile groups, mercapto groups, nitro groups, nitroso groups, acyl groups, acid anhydride groups, azide groups, azo groups, cyanato groups, urethane groups, urea groups, mixtures thereof, and the like, wherein two or more substituents can be joined together to form a ring;
R₃ and R₃ each, independently of the other, are either:
(a) photoinitiating groups, such as groups derived from 1-(4-(2-hydroxyethoxy)phenyl)-2-hydroxy-2-methylpropan-1-one, of the formula 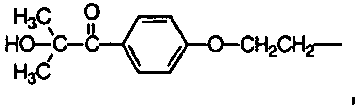 groups derived from 1-hydroxycyclohexylphenylketone, of the formula 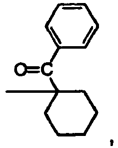 groups derived from 2-hydroxy-2-methyl-1-phenylpropan-1-one, of the formula 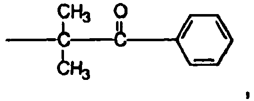 groups derived from *N,N*-dimethylethanolamine or *N,N-*dimethylethylenediamine, of the formula 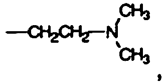 or the like, or:
(b) a group which is:
   (i) an alkyl group (including linear and branched, saturated and unsaturated, cyclic and acyclic, and substituted and unsubstituted alkyl groups, and wherein heteroatoms, such as oxygen, nitrogen, sulfur, silicon, phosphorus, boron, and the like either may or may not be present in the alkyl group), in one embodiment with at least 2 carbon atoms, in another embodiment with at least 3 carbon atoms, and in yet another embodiment with at least 4 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges,
   (ii) an aryl group (including substituted and unsubstituted aryl groups, and wherein heteroatoms, such as oxygen, nitrogen, sulfur, silicon, phosphorus, boron, and the like either may or may not be present in the aryl group), in one embodiment with at least 5 carbon atoms, and in another embodiment with at least 6 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as phenyl or the like,
   (iii) an arylalkyl group (including substituted and unsubstituted arylalkyl groups, wherein the alkyl portion of the arylalkyl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the arylalkyl group), in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 60 carbon atoms, although the number of carbon atoms can be outside of these ranges, such as benzyl or the like, or
   (iv) an alkylaryl group (including substituted and unsubstituted alkylaryl groups, wherein the alkyl portion of the alkylaryl group can be linear or branched, saturated or unsaturated, and cyclic or acyclic, and wherein heteroatoms, such as oxygen, nitrogen, sulfur, silicon, phosphorus, boron, and the like either may or may not be present in either the aryl or the alkyl portion of the alkylaryl group), in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, such as tolyl or the like, wherein the substituents on the substituted alkyl, arylalkyl, and alkylaryl groups can be (but are not limited to) halogen atoms, ether groups, aldehyde groups, ketone groups, ester groups, amide groups, carbonyl groups, thiocarbonyl groups, sulfide groups, phosphine groups, phosphonium groups, phosphate groups, nitrile groups, mercapto groups, nitro groups, nitroso groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring;
   provided that at least one of R₃ and R₃' is a photoinitiating group;
   and X and X' each, independently of the other, is an oxygen atom or a group of the formula -NR₄-, wherein R₄ is:
   (i) a hydrogen atom;
   (ii) an alkyl group, including linear and branched, saturated and unsaturated, cyclic and acyclic, and substituted and unsubstituted alkyl groups, and wherein heteroatoms either may or may not be present in the alkyl group, in one embodiment with at least 1 carbon atom, and in one embodiment with no more than 100 carbon atoms, in another embodiment with no more than 60 carbon atoms, and in yet another embodiment with no more than 30 carbon atoms, although the number of carbon atoms can be outside of these ranges,
   (iii) an aryl group, including substituted and unsubstituted aryl groups, and wherein heteroatoms either may or may not be present in the aryl group, in one embodiment with at least 5 carbon atoms, and in another embodiment with at least 6 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges,
   (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, or
   (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, in one embodiment with at least 6 carbon atoms, and in another embodiment with at least 7 carbon atoms, and in one embodiment with no more than 100 carbon atoms, in another embodiment with no more than 60 carbon atoms, and in yet another embodiment with no more than 30 carbon atoms, although the number of carbon atoms can be outside of these ranges, wherein the substituents on the substituted alkyl, aryl, arylalkyl, and alkylaryl groups can be (but are not limited to) halogen atoms, ether groups, aldehyde groups, ketone groups, ester groups, amide groups, carbonyl groups, thiocarbonyl groups, sulfate groups, sulfonate groups, sulfonic acid groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring.

In one specific embodiment, R₂ and R₂' are the same as each other; in another specific embodiment, R₂ and R₂' are different from each other. In one specific embodiment, R₃ and R₃' are the same as each other; in another specific embodiment, R₃ and R₃' are different from each other.

In one specific embodiment, R₂ and R₂' are each groups of the formula -C₃₄H₅₆₊ₐ- and are branched alkylene groups which may include unsaturations and cyclic groups, wherein a is an integer of 0, 1, 2, 3, 4, 5, 6, 7, 8, 9, 10, 11, or 12, including (but not limited to) isomers of the formula 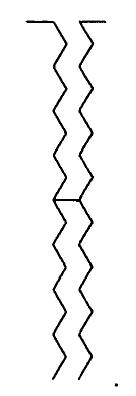 In one specific embodiment, R₁ is an ethylene (-CH₂CH₂-) group.

In one specific embodiment, R₃ and R₃' are both

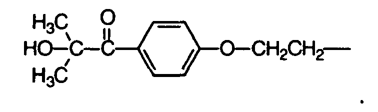

In one specific embodiment, the compound is of the formula 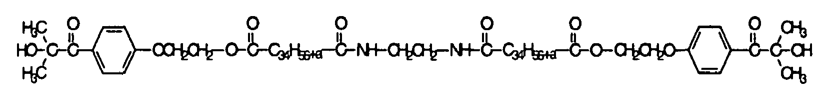 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12, including (but not limited to) isomers of the formula

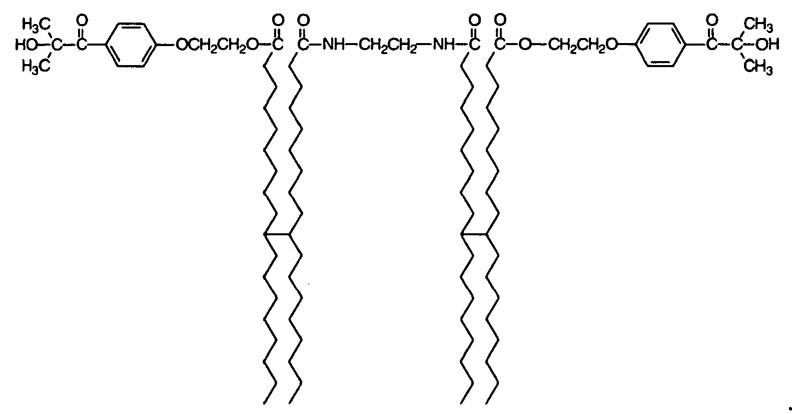

Additional specific examples of compounds of this formula include those of the formula 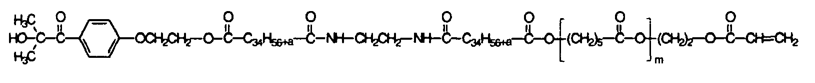 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein m is an integer, including but not limited to embodiments wherein m is 2, including (but not limited to) isomers of the formula 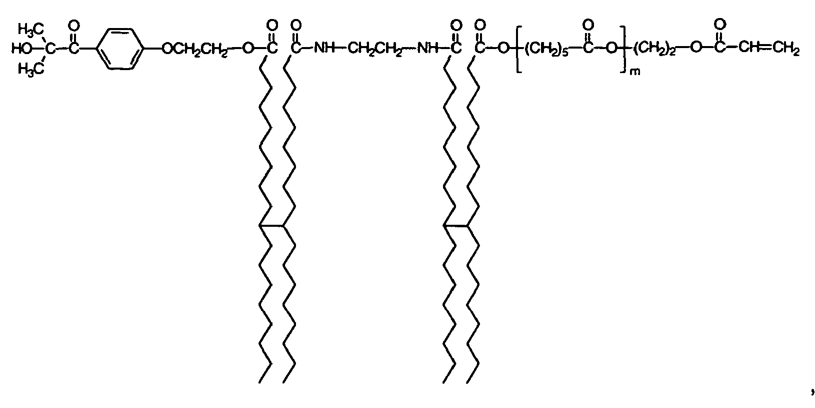 those of the formula 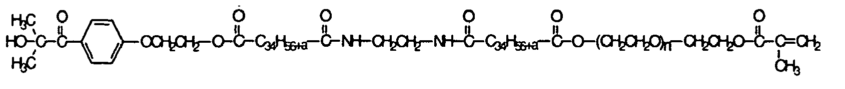 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein n is an integer, including but not limited to embodiments wherein n is 2 and wherein n is 5, including (but not limited to) isomers of the formula 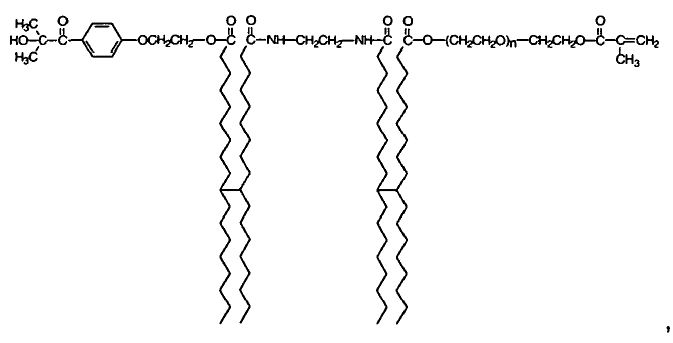 those of the formula 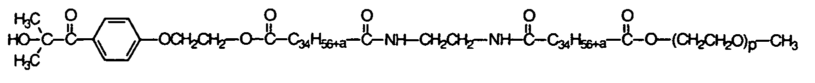 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein p is an integer, including but not limited to embodiments wherein p is 2 and wherein p is 3, including (but not limited to) isomers of the formula 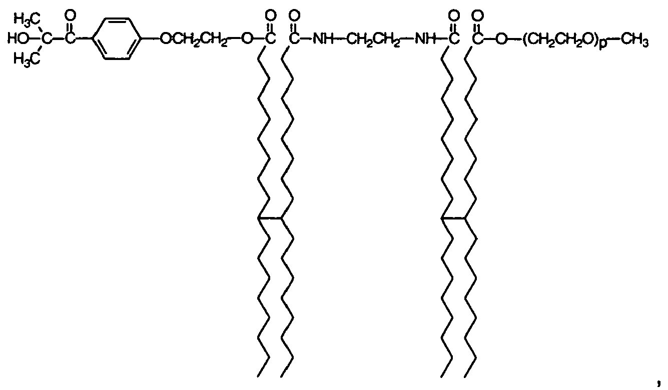 those of the formula 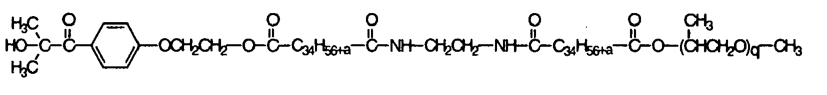 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein q is an integer, including but not limited to embodiments wherein q is 2 and wherein q is 3, including (but not limited to) isomers of the formula 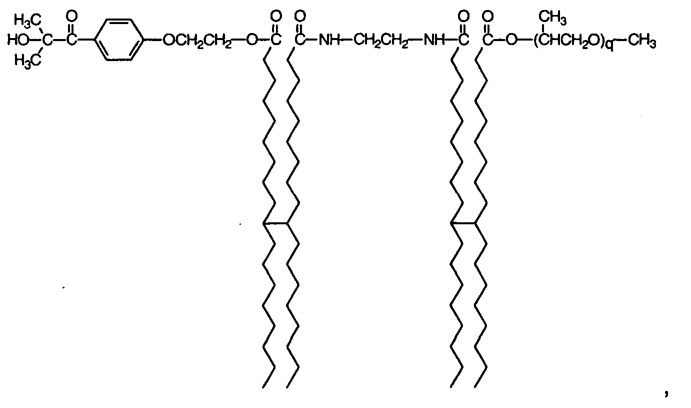 those of the formula 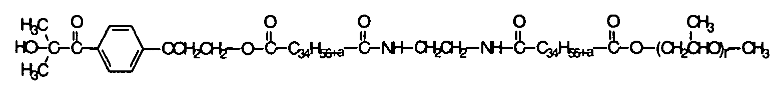 wherein -C₃₄H₅₆₊ₐ- represents a branched alkylene group which may include unsaturations and cyclic groups, wherein a is an integer of 0, 1, 2, 3, 4, 5, 6, 7, 8, 9, 10, 11, or 12 and wherein r is an integer, including but not limited to embodiments wherein r is 2 and wherein r is 3, including (but not limited to) isomers of the formula 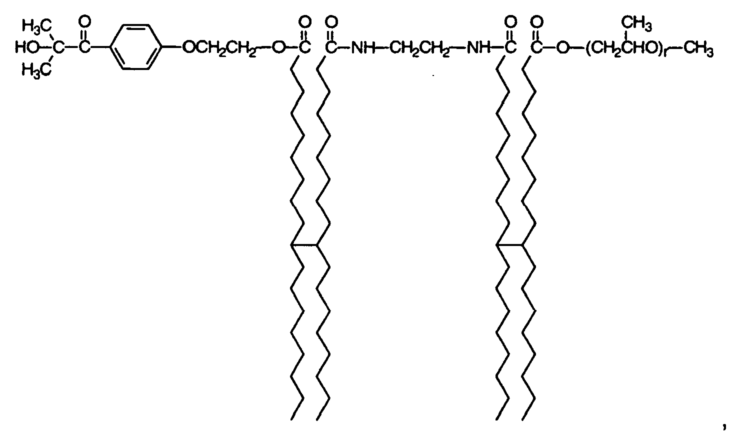 and the like, as well as mixtures thereof.

In embodiments, the gellant is a mixture of 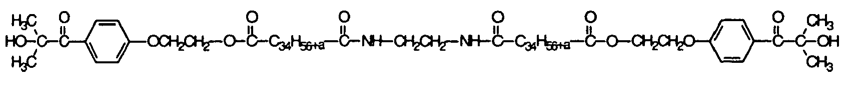 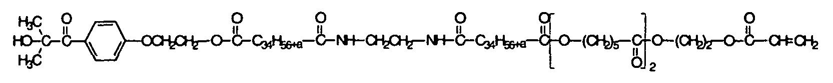 and 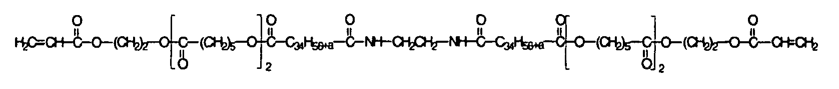 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

In embodiments, gellants herein can comprise materials disclosed in copending Application U.S. Serial No. 11/290,121, filed November 30, 2005, entitled "Phase Change Inks Containing Curable Amide Gellant Compounds," with the named inventors Eniko Toma, Jennifer L. Belelie, and Peter G. Odell, including a compound of the formula 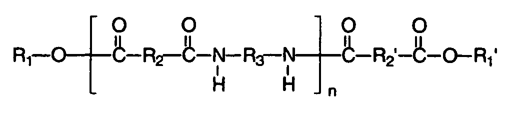 wherein R₁ and R₁' each, independently of the other, is an alkyl group having at least one ethylenic unsaturation, an arylalkyl group having at least one ethylenic unsaturation, or an alkylaryl group having at least one ethylenic unsaturation, R₂, R₂', and R₃ each, independently of the others, are alkylene groups, arylene groups, arylalkylene groups, or alkylarylene groups, and n is an integer representing the number of repeat amide units and is at least 1.
The gellant compounds as disclosed herein can be prepared by any desired or effective method.
For example, in embodiments, gellants can be prepared as described in U. S. Patent 7,259,275, entitled "Method for Preparing Curable Amide Gellant Compounds," with the named inventors Jennifer L. Belelie, Adela Goredema, Peter G. Odell, and Eniko Toma, which describes a process for preparing a compound of the formula 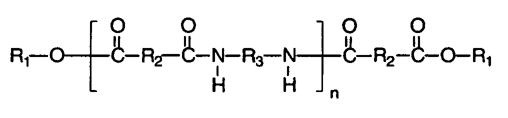 wherein R₁ is an alkyl group having at least one ethylenic unsaturation, an arylalkyl group having at least one ethylenic unsaturation, or an alkylaryl group having at least one ethylenic unsaturation, R₂ and R₃ each, independently of the others, are alkylene groups, arylene groups, arylalkylene groups, or alkylarylene groups, and n is an integer representing the number of repeat amide units and is at least 1, said process comprising: (a) reacting a diacid of the formula

HOOC-R₂-COOH

with a diamine of the formula 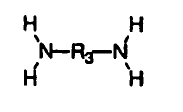 in the absence of a solvent while removing water from the reaction mixture to form an acid-terminated oligoamide intermediate; and (b) reacting the acid-terminated oligoamide intermediate with a monoalcohol of the formula

R₁-OH

in the presence of a coupling agent and a catalyst to form the product.

The radiation curable phase change inks herein can also optionally contain an antioxidant. The optional antioxidants can protect the images from oxidation and can also protect the ink components from oxidation during the heating portion of the ink preparation process. Specific examples of suitable antioxidant stabilizers include (but are not limited to) NAUGARD® 524, NAUGARD® 635, NAUGARD® A, NAUGARD® I-403, and NAUGARD® 959, commercially available from Crompton Corporation, Middlebury, CT; IRGANOX® 1010 and IRGASTAB® UV 10, commercially available from Ciba Specialty Chemicals; GENORAD 16 and GENORAD 40 commercially available from Rahn AG, Zurich, Switzerland, and the like, as well as mixtures thereof. When present, the optional antioxidant is present in the ink in any desired or effective amount, in one embodiment at least 0.01 percent by weight of the ink carrier, in another embodiment at least 0.1 percent by weight of the ink carrier, and in yet another embodiment at least 1 percent by weight of the ink carrier, and in one embodiment no more than 20 percent by weight of the ink carrier, in another embodiment no more than 5 percent by weight of the ink carrier, and in yet another embodiment no more than 3 percent by weight of the ink carrier, although the amount can be outside of these ranges.

The radiation curable phase change inks can also, if desired, contain additives to take advantage of the known functionality associated with such additives. Such additives may include, for example, defoamers, slip and leveling agents, pigment dispersants, surfactants, and the like, as well as mixtures thereof. The inks can also include additional monomeric or polymeric materials as desired.

Curing of the ink can be effected by exposure of the ink image to actinic radiation at any desired or effective wavelength, in one embodiment at least 200 nanometers, and one embodiment no more than 480 nanometers, although the wavelength can be outside of these ranges. Exposure to actinic radiation can be for any desired or effective period of time, in one embodiment for at least 0.2 second, in another embodiment for at least 1 second, and in yet another embodiment for at least 5 seconds, and in one embodiment for no more than 30 seconds, and in another embodiment for no more than 15 seconds, although the exposure period can be outside of these ranges. By curing is meant that the curable compounds in the ink undergo an increase in molecular weight upon exposure to actinic radiation, such as (but not limited to) crosslinking, chain lengthening, or the like.

The ink compositions generally have melt viscosities at the jetting temperature (in one embodiment no lower than 50°C, in another embodiment no lower than 60°C, and in yet another embodiment no lower than 70°C, and in one embodiment no higher than 120°C, and in another embodiment no higher than 110°C, although the jetting temperature can be outside of these ranges) in one embodiment of no more than 30 centipoise, in another embodiment of no more than 20 centipoise, and in yet another embodiment of no more than 15 centipoise, and in one embodiment of no less than 2 centipoise, in another embodiment of no less than 5 centipoise, and in yet another embodiment of no less than 7 centipoise, although the melt viscosity can be outside of these ranges.

In one specific embodiment, the inks are jetted at low temperatures, in particular at temperatures below 110°C, in one embodiment from 40°C to 110°C, in another embodiment from 50°C to 110°C, and in yet another embodiment from 60°C to 90°C, although the jetting temperature can be outside of these ranges. At such low jetting temperatures, the conventional use of temperature differential between the jetted ink and the substrate upon which the ink is jetted to effect a rapid phase change in the ink (i.e., from liquid to solid) may not be effective. The gellant can thus be used to effect a rapid viscosity increase in the jetted ink upon the substrate. In particular, jetted ink droplets can be pinned into position on a receiving substrate such as a final recording substrate, such as paper or transparency material, or an intermediate transfer member, such as a transfuse drum or belt, that is maintained at a temperature cooler than the ink jetting temperature of the ink through the action of a phase change transition in which the ink undergoes a significant viscosity change from a liquid state to a gel state (or semi-solid state).

In some embodiments, the temperature at which the ink forms the gel state is any temperature below the jetting temperature of the ink, in one embodiment any temperature that is 5°C or more below the jetting temperature of the ink. In one embodiment, the gel state can be formed at a temperature of at least 25°C, and in another embodiment at a temperature of at least 30°C, and in one embodiment of no more than 100°C, in another embodiment of no more than 70°C, and in yet another embodiment of no more than 50°C, although the temperature can be outside of these ranges. A rapid and large increase in ink viscosity occurs upon cooling from the jetting temperature, at which the ink is in a liquid state, to the gel temperature, at which the ink is in the gel state. The viscosity increase is in one specific embodiment at least a 10^{2.5}-fold increase in viscosity.

A suitable gelling agent for the ink will gel the monomers/oligomers in the ink vehicle quickly and reversibly and will demonstrate a narrow phase change transition, for example within a temperature range of from 30°C to 100°C, preferably of from 30°C to 70°C, although the transition range can be outside of these temperature ranges. The gel state of the ink in one specific embodiment exhibits a minimum of 10^{2.5} centipoise, and in another specific embodiment 10³ centipoise, increase in viscosity at transferring temperatures, e.g., in one specific embodiment from 30°C to 70°C, compared to the viscosity at the jetting temperature. One specific embodiment is directed to gellant containing inks that rapidly increase in viscosity within from 5°C to 10°C below the jetting temperature and ultimately reach a viscosity above 10⁴ times the jetting viscosity, and in another embodiment 10⁵ times the jetting viscosity, although the viscosity can be outside of these ranges.

When the inks are in the gel state, the viscosity of the ink is in one embodiment at least 1,000 centipoise, in another embodiment at least 10,000 centipoise, and in yet another embodiment at least 100,000 centipoise, although the viscosity can be outside of these ranges. Viscosity values in the gel state are in one embodiment at least 10³ centipoise, and in another embodiment at least 10^{4.5} centipoise, and in one embodiment no more than 10⁹ centipoise, and in another embodiment no more than 10^{6.5} centipoise, although the gel state viscosity can be outside of these ranges. The preferred gel phase viscosity can vary with the print process. For example, the highest viscosities are preferred when jetting directly to porous paper, or when employing intermediate transfer, in order to minimize the effects of ink bleed and feathering. On the other hand, less porous substrates such as plastic may lead to the use of lower ink viscosities that control dot gain and agglomeration of individual ink pixels. The gel viscosity can be controlled by ink formulation and substrate temperature. An additional benefit of the gel state for radiation curable inks is that higher viscosities of 10³ to 10⁴ centipoise can reduce oxygen diffusion in the ink, which in turn can lead to a faster rate of cure in free radical initiation.

For printing applications wherein the ink is printed directly onto a final substrate, the viscosity of the ink in one specific embodiment increases to 10⁵ centipoise or greater at the final substrate temperature to prevent the ink from soaking into the final substrate and/or to facilitate adhesion to the final substrate until curing by exposure to radiation. In one specific embodiment, the temperature of the final substrate or the intermediate transfer member onto which the ink is printed and at which the ink viscosity increases to 10⁵ centipoise or greater is 50°C or lower.

The ink compositions can be prepared by any desired or suitable method. For example, the ink ingredients can be mixed together, followed by heating, to a temperature in one embodiment of at least 80°C, and in one embodiment of no more than 100°C, although the temperature can be outside of these ranges, and stirring until a homogeneous ink composition is obtained, followed by cooling the ink to ambient temperature (typically from 20°C to 25°C). The inks are gels at ambient temperature.

The system for embedding and recovering the information on a substrate comprises an imagine forming device for writing the printed markings. The image forming device (for example, ink jet printer) receives data regarding the printed markings to be formed on the substrate and forms the printed markings corresponding to the data. The system may also include a processor that converts the information to be encrypted into the appropriate digital values and/or into the data for forming the printed markings for use by the image forming device.

Advantageously, the present ultra-violet curable gellant phase change ink is compatible with current printhead technology. The printed markings can be formed by any suitable process that can form images on a substrate with a desired height. For example, the raised printed markings can be formed, for example, using existing ink jet printing devices and the like with appropriate multiple passing. That is, knowing the print height of the particular marking material on a given substrate formed using the image forming device, the appropriate print heights for each of the printed markings can then be readily formed with the appropriate number of print passes to achieve the required print height for each of the printed markings.

The inks can be employed in apparatus for direct printing ink jet processes and in indirect printing ink jet applications. Another embodiment disclosed herein is directed to a process which comprises incorporating an ink as disclosed herein into an ink jet printing apparatus, melting the ink, and causing droplets of the melted ink to be ejected in an imagewise pattern onto a recording substrate. A direct printing process is also disclosed in, for example, U.S. Patent 5,195,430. In one specific embodiment, the printing apparatus employs a piezoelectric printing process wherein droplets of the ink are caused to be ejected in imagewise pattern by oscillations of piezoelectric vibrating elements. Inks as disclosed herein can also be employed in other hot melt printing processes, such as hot melt acoustic ink jet printing, hot melt thermal ink jet printing, hot melt continuous stream or deflection ink jet printing, and the like. Phase change inks as disclosed herein can also be used in printing processes other than hot melt ink jet printing processes.

In one embodiment, the apparatus is an ink jet printing device as described in commonly assigned, co-pending U.S. Patent Application of Gabriel If time et al, Serial Number 11/683,011, entitled "Dual Printer for Regular and Raised Print," filed March 7, 2007, that includes at least an ink jet print head and a print region surface toward which ink is jetted from the ink jet print head, wherein a height distance between the ink jet print head and the print region surface is adjustable.

In embodiments, the image forming device my also comprise both a xerographic device and an ink jet device. For example, the image forming device may include a xerographic device and a separate ink jet device containing the marking material for forming the printed markings. The xerographic device can be used to form a reproduced image, while the ink jet device can print the encrypted information onto each document. Desirably, the ink jet device is downstream of the xerographic device in a process direction so that the encrypted information is not overprinted by the xerographic device, but the ink jet device may also be upstream of the xerographic device.

The printed markings can be machine read and decoded by any suitable or desired method. The reading is based on the different print heights of the printed markings. For example, the digital information is read by an electronic reader which has the capability to distinguish between the different print heights. The reader may operate, for example, by absorption, transmission or reflection spectroscopy, since different heights of the printed markings with show different optical properties. In addition, a profilometer, capable of measuring actual print heights, could be used. For glyph printed markings, bitmap images of the glyphs can be processed even when image distortion or degradation has occurred by, for example, facsimile transmission, scanning of photocopies, or the like. In certain decoders, the image processing which is performed for decoding the glyph codes first locates the glyphs in the x-y coordinates of the bitmap image space, then constructs a table for indexing the glyphs in the spatial order in which data was encoded in them, and then analyzes the glyphs in indexed order for sequentially extracting the data values encoded therein. In other decoders, the image processing classifies the glyphs by their shapes while concurrently locating their centers in the bitmap image space, so that decoded values of the glyphs conveniently area indexed to the bit-map image space. These spatially indexed decoded data values may be sorted in accordance with the spatial template or pattern that governs their spatial ordering if it is desired to restore their serial order in the time domain.

Once the printed markings are read and decoded or translated into the digital values, appropriate software may be used to convert the values to human readable information.

Advantages provided herein include the ability to encrypt information on any document or package. In embodiments, herein, the ultra-violet curable gellant inks provide a material for providing identifying marks on an original document or package or desired substrate that cannot be duplicated reprographically. In embodiments, the present encryption methods can be described as covert enhancements for document security. In embodiments, raised bars or images are formed by repeated deposition of ink on the same area until a desired height and pattern is achieved. The robustness of the present ultra-violet curable gellant phase change ink is advantageous, for example because the documents and packaging may undergo rough handling. The ultra- violet curable gellant phase change ink has a wide substrate latitude and can be used for plain and coated papers, flexible substrates, and the like, which enables freedom to print on any type of document or packaging desired. For example, printing on flexible packaging substrates is useful for various applications. The term "flexible" is intended to refer to thin film or foil materials which are generally supplied in a roll format, printed on, and then rolled up again after printing, although flexible is not limited to these rolled materials. Exemplary flexible packaging substrates include plastics, metal foils, laminates thereof, and laminates with paper. In specific embodiments, the packaging substrates herein comprise aluminum foil, polyester film, or polypropylene film. Flexible packaging substrates can be used, for example, to package food, pharmaceuticals, cosmetics, or tobacco. The inks have little to no penetration into the substrate, residing primarily on the surface of the substrate. The World Health Organization determined that the global sales of counterfeit drugs were $32 billion dollars in 2003 and that the amount of pharmaceutical counterfeiting had increased 660% in 2007. The ability to covertly label packaging in a way that is nearly impossible to duplicate provides enormous utility advantages in the pharmaceutical industry, for example, where counterfeiting of drugs can have extreme consequences including illness and even death.

### EXAMPLES

The following Examples are being submitted to further define various species of the present disclosure. Also, parts and percentages are by weight unless otherwise indicated.

### Example 1

An ultra-violet curable phase change gellant ink was prepared containing 7.5 percent by weight curable amide gellant as described in Example VIII of U. S. Patent 7,279,587, 5 percent by weight Unilin 350™ acrylate wax prepared as described in U. S. Patent Publication 2007120925, 5 percent by weight pentafunctional acrylate monomer (SR 399LV dipentaerythritol pentaacrylate available from Sartomer Co., Inc.), 72.8 percent by weight difunctional acrylate monomer (propoxylated neopentyl glycol diacrylate SR 9003 available from Sartomer Co., Inc.), 3 percent by weight IRGACURE® 379 photoinitiator (obtained from Ciba Specialty Chemicals), 1 percent by weight IRGACURE® 819 photoinitiator (obtained from Ciba Specialty Chemicals), 3.5 percent by weight IRGACURE® 127 photoinitiator (obtained from Ciba Specialty Chemicals), and 2 percent by weight DAROCUR® ITX photoinitiator (obtained from Ciba Specialty Chemicals) and 0.2 percent by weight UV stabilizer (IRGASTAB® UV1 0, obtained from Ciba Specialty Chemicals). All of the components were stirred together at 90°C for 1 hour.

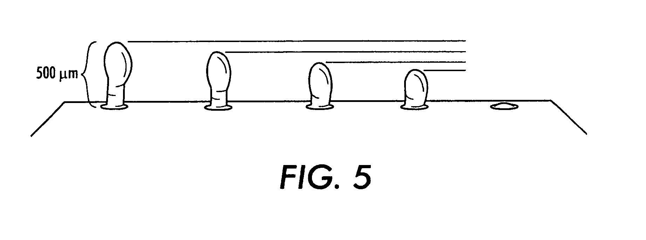

The ink material was digitally printed using a modified Xerox Phaser® 860 printer firing with every third jet. A Xerox® piezoelectric printhead, oriented horizontal to the substrate, was fired for a predetermined number of 0.5 second bursts. Figure 5 illustrates free-standing structures that were ink jetted onto a room temperature Mylar® substrate as described and cured after printing by exposure to UV light from a UV Fusion LC-6B Benchtop Conveyor equipped with UV Fusion Light Hammer 6 Ultraviolet Lamp System employing a "D" bulb for a minimum of 1 seconds to provide robust structures. The structures had a 5.5 millimeter gap between each structure. The left most structure had a height of about 500 micrometers from the substrate to the top of the structure.

## Claims

1. A method for embedding information on a substrate comprising:
converting information to machine readable code, wherein the code comprises a set of intended printed markings, wherein each intended printed marking of the set has a predetermined height on a substrate and represents a predetermined value, wherein intended printed markings having a same predetermined height represent a same data value, and wherein intended printed markings representing different data values have different heights; and
printing the machine readable code on the substrate by depositing an ultra-violet curable phase change ink comprising an optional colorant and a phase change ink vehicle comprising a radiation curable monomer or prepolymer; a photoinitiator; a reactive wax; and a gellant and curing the deposited ink, such that each of the intended printed markings is printed to have the predetermined height.

2. The method according to claim 1, wherein the at least one curable monomer or prepolymer is a multifunctional acrylate or methacrylate compound.

3. The method according to claim 2, wherein the multifunctional acrylate or methacrylate compound is propoxylated neopentyl glycol diacrylate, pentaerythritol tetraacrylate, pentaerythritol tetramethacrylate, 1,2-ethylene glycol diacrylate, 1,2-ethylene glycol dimethacrylate, 1,6-hexanediol diacrylate, 1,6-hexanediol dimethacrylate, 1,12-dodecanol diacrylate, 1,12-dodecanol dimethacrylate, tris(2-hydroxy ethyl) isocyanurate triacrylate, hexanediol diacrylate, tripropylene glycol diacrylate, dipropylene glycol diacrylate, amine modified polyether acrylate, trimethylolpropane triacrylate, glycerol propoxylate triacrylate, dipentaerythritol pentaacrylate, dipentaerythritol hexaacrylate, ethoxylated pentaerythritol tetraacrylate, or mixtures or combinations thereof.

4. The method according to any of claims 1 to 3, wherein the reactive wax is a hydroxyl-terminated polyethylene wax functionalized with a polymerizable group.

5. The method according to any of claims 1 to 4, wherein the gellant is a compound of the formula 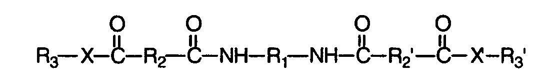 wherein R₁ is (i) an alkylene group, including linear and branched, saturated and unsaturated, cyclic and acyclic, and substituted and unsubstituted alkylene groups, and wherein heteroatoms either may or may not be present in the alkylene group, (ii) an arylene group, including substituted and unsubstituted arylene groups, and wherein heteroatoms either may or may not be present in the arylene group, (iii) an arylalkylene group, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) an alkylarylene group, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₂ and R₂' each, independently of the other, are (i) alkylene groups, including linear and branched, saturated and unsaturated, cyclic and acyclic, and substituted and unsubstituted alkylene groups, and wherein heteroatoms either may or may not be present in the alkylene group, (ii) arylene groups, including substituted and unsubstituted arylene groups, and wherein heteroatoms either may or may not be present in the arylene group, (iii) arylalkylene groups, including substituted and unsubstituted arylalkylene groups, wherein the alkyl portion of the arylalkylene group can be linear or branched, saturated or unsaturated, and cyclic or acyclic, and wherein heteroatoms either may or may not be present in either the aryl or the alkyl portion of the arylalkylene group, or (iv) alkylarylene groups, including substituted and unsubstituted alkylarylene groups, wherein the alkyl portion of the alkylarylene group can be linear or branched, saturated or unsaturated, and cyclic or acyclic, and wherein heteroatoms either may or may not be present in either the aryl or the alkyl portion of the alkylarylene group, R₃ and R₃' each, independently of the other, are either (a) photoinitiating groups, or (b) groups which are (i) alkyl groups, including linear and branched, saturated and unsaturated, cyclic and acyclic, and substituted and unsubstituted alkyl groups, and wherein heteroatoms either may or may not be present in the alkyl group, (ii) aryl groups, including substituted and unsubstituted aryl groups, wherein heteroatoms either may or may not be present in the aryl group, (iii) arylalkyl groups, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (iv) alkylaryl groups, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group, and X and X' each, independently of the other, is an oxygen atom or a group of the formula -NR₄-, wherein R₄ is (i) a hydrogen atom, (ii) an alkyl group, including linear and branched, saturated and unsaturated, cyclic and acyclic, and substituted and unsubstituted alkyl groups, and wherein heteroatoms either may or may not be present in the alkyl group, (iii) an aryl group, including substituted and unsubstituted aryl groups, and wherein heteroatoms either may or may not be present in the aryl group, (iv) an arylalkyl group, including substituted and unsubstituted arylalkyl groups, wherein the alkyl portion of the arylalkyl group can be linear or branched, saturated or unsaturated, and cyclic or acyclic, and wherein heteroatoms either may or may not be present in either the aryl or the alkyl portion of the arylalkyl group, or (v) an alkylaryl group, including substituted and unsubstituted alkylaryl groups, wherein the alkyl portion of the alkylaryl group can be linear or branched, saturated or unsaturated, and cyclic or acyclic, and wherein heteroatoms either may or may not be present in either the aryl or the alkyl portion of the alkylaryl group.

6. The method according to any of claims 1 to 5, wherein the gellant is a mixture of 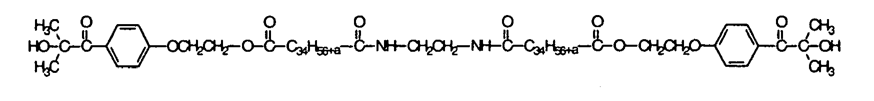 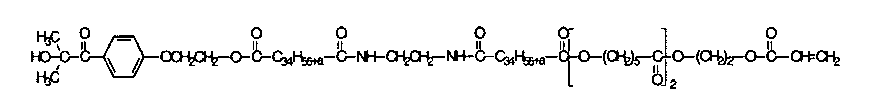 and 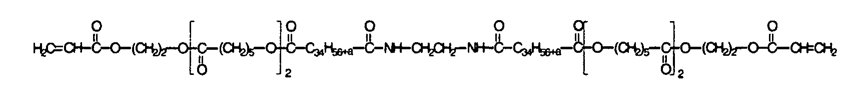 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

7. The method according to any of claims 1 to 6, wherein the code is a bar code or a Data Matrix style code.

8. The method according to any of claims 1 to 6, wherein the code is a binary bar code.

9. Machine readable code comprising a set of printed markings created with an ultra-violet curable phase change ink comprising an optional colorant and a phase change ink vehicle comprising a radiation curable monomer or prepolymer; a photoinitiator; a reactive wax; and a gellant; wherein each printed marking of the set has a predetermined print height on a substrate and represents a predetermined data value, wherein the set of printed markings includes printed markings representing different data value and having different print heights.

10. A substrate having machine readable code thereon, wherein the code comprises a set of printed markings created with an ultra-violet curable phase change ink comprising an optional colorant and a phase change ink vehicle comprising a radiation curable monomer or prepolymer; a photoinitiator; a reactive wax; and a gellant; wherein each printed marking of the set has a predetermined height on a substrate and represents a predetermined data value wherein printed markings having a same predetermined height represent a same data value and wherein printed markings representing different data values have different heights.

11. The substrate according to claim 10, wherein the substrate comprises aluminum foil, polyester film, or polypropylene film.

12. The substrate according to claim 10 or 11, wherein the markings are formed from substantially colorless ink.

13. The substrate according to any of claims 10 to 12, wherein the gellant is a mixture of 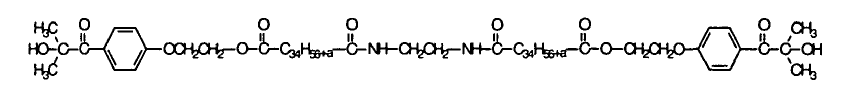 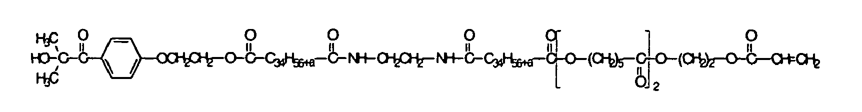 and 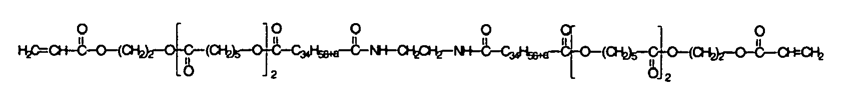 wherein -C₃₄H₅₆₊ₐ- represents a branched alkylene group, which may or may not include unsaturations and cyclic groups, substituted and unsubstituted alkylene groups, and wherein heteroatoms either may or may not be present in the alkylene group, wherein a is an integer of 0, 1, 2, 3, 4, 5, 6, 7, 8, 9, 10, 11, or 12.

14. A system for embedding and recovering information on a substrate comprising:
an image forming device containing at least one marking material comprising an ultra-violet curable phase change ink comprising an optional colorant and a phase change ink vehicle comprising a radiation curable monomer or prepolymer; a photoinitiator; a reactive wax; and a gellant, wherein the image forming device receives data, corresponding to the information, for forming machine readable code in accordance with claim 9, on an image receiving substrate, and forms an image including the machine readable code on the image receiving substrate with the at least one marking material; and
a document reading device comprising a reader that detects the differences in height among the different printed markings of the machine readable code.

15. The system according to claim 14, wherein the image forming device is an ink jet device.

## Patentansprüche

1. Verfahren zum Einbetten von Informationen auf einem Substrat, umfassend:
Konvertieren der Information in einen maschinenlesbaren Code, worin der Code ein Set von beabsichtigten gedruckten Markierungen umfasst, worin jede beabsichtigte gedruckte Markierung des Sets eine vorbestimmte Höhe auf einem Substrat aufweist und einen vorbestimmten Wert bedeutet, worin beabsichtigte gedruckte Markierungen mit der gleichen vorbestimmten Höhe den gleichen Datenwert bedeuten und worin beabsichtigte gedruckte Markierungen, die unterschiedliche Datenwerte bedeuten, unterschiedliche Höhen aufweisen; und
Drucken des maschinenlesbaren Codes auf das Substrat durch Aufbringen einer ultraviolett aushärtbaren Phasenwechseltinte, umfassend einen optionalen Farbstoff und ein Phasenwechseltintenvehikel, umfassend ein durch Strahlung härtbares Monomer oder Präpolymer; einen Fotoinitiator; ein reaktives Wachs; und ein Gelierungsmittel und Aushärten der aufgebrachten Tinte, so dass jede der beabsichtigten gedruckten Markierungen gedruckt wird, um die vorbestimmte Höhe aufzuweisen.

2. Das Verfahren gemäß Anspruch 1, worin das mindestens eine aushärtbare Monomer oder Präpolymer eine multifunktionelle Acrylat- oder Methacrylatverbindung ist.

3. Das Verfahren gemäß Anspruch 2, worin die multifunktionelle Acrylat- oder Methacrylatverbindung propoxyliertes Neopentylglycoldiacrylat, Pentaerythritoltetraacrylat, Pentaerythritoltetramethacrylat, 1,2-Ethylenglycoldiacrylat, 1,2-Ethylenglycoldimethacrylat, 1,6-Hexandioldiacrylat, 1,6-Hexandioldimethacrylat, 1,12-Dodecanoldiacrylat, 1,12-Dodecanoldimethacrylat, Tris(2-hydroxyethyl)isocyanurattriacrylat, Hexandioldiacrylat, Tripropylenglycoldiacrylat, Dipropylenglycoldiacrylat, Amin-modifiziertes Polyetheracrylat, Trimethylolpropantriacrylat, Glycerolpropylattriacrylat, Dipentaerythritolpentaacrylat, Dipentaerythritolhexaacrylat, ethoxyliertes Pentaerythritoltetraacrylat oder Mischungen oder Kombinationen daraus ist.

4. Das Verfahren gemäß einem der Ansprüche 1 bis 3, worin das reaktive Wachs ein Hydroxyl-terminiertes Polyethylenwachs ist, das mit einer polymerisierbaren Gruppe funktionalisiert ist.

5. Das Verfahren gemäß einem der Ansprüche 1 bis 4, worin das Gelierungsmittel eine Verbindung der Formel 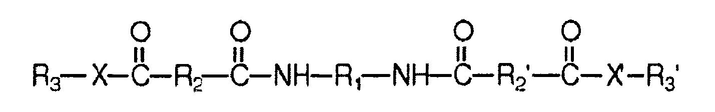 ist, worin R₁ ist (i) eine Alkylengruppe, beinhaltend lineare und verzweigte, gesättigte und ungesättigte, cyclische und acyclische und substituierte und unsubstituierte Alkylengruppen und worin Heteroatome entweder vorhanden oder nicht vorhanden sein können in der Alkylengruppe, (ii) eine Arylengruppe, beinhaltend substituierte und unsubstituierte Arylengruppen und worin Heteroatome entweder vorhanden oder nicht vorhanden sein können in der Arylengruppe, (iii) eine Arylalkylengruppe, beinhaltend substituierte und unsubstituierte Arylalkylengruppen, worin der Alkylteil der Arylalkylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Arylalkylengruppe oder (iv) eine Alkylarylengruppe, beinhaltend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylengruppe; R₂ und R₂' sind jeweils unabhängig voneinander (i) Alkylengruppen, beinhaltend lineare und verzweigte, gesättigte und ungesättigte, cyclische und acyclische und substituierte und unsubstituierte Alkylengruppen und worin Heteroatome entweder vorhanden oder nicht vorhanden sein können in der Alkylengruppe, (ii) Arylengruppen, beinhaltend substituierte und unsubstituierte Arylengruppen und worin Heteroatome entweder vorhanden oder nicht vorhanden sein können in der Arylengruppe, (iii) Arylalkylengruppen, beinhaltend substituierte und unsubstituierte Arylalkylengruppen, worin der Alkylteil der Arylalkylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Arylalkylengruppe oder (iv) Alkylarylengruppen, beinhaltend substituierte und unsubstituierte Alkylarylengruppen, worin der Alkylteil der Alkylarylengruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylengruppe; R₃ und R₃' sind jeweils unabhängig voneinander entweder (a) fotoinitiierende Gruppen oder (b) Gruppen, welche sind (i) Alkylgruppen, beinhaltend lineare und verzweigte, gesättigte und ungesättigte, cyclische und acyclische und substituierte und unsubstituierte Alkylgruppen, und worin Heteroatome entweder vorhanden oder nicht vorhanden sein können in der Alkylgruppe, (ii) Arylgruppen, beinhaltend substituierte und unsubstituierte Arylgruppen, worin Heteroatome entweder vorhanden oder nicht vorhanden sein können in der Arylgruppe, (iii) Arylalkylgruppen, beinhaltend substituierte und unsubstituierte Arylalkylgruppen, worin der Alkylteil der Arylalkylgruppe linear oder verzweigt, gesättigt oder ungesättigt und cyclisch oder acylisch sein kann und worin Heteroatome entweder vorhanden oder nicht vorhanden sein können in entweder dem Aryl- oder dem Alkylteil der Arylalkylgruppe oder (iv) Alkylarylgruppen, beinhaltend substituierte und unsubstituierte Alkylarylgruppen, worin der Alkylteil der Alkylarylgruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylgruppe; und X und X' jeweils unabhängig voneinander ein Sauerstoffatom ist oder eine Gruppe der Formel -NR₄-, worin R₄ ist (i) ein Wasserstoffatom, (ii) eine Alkylgruppe, beinhaltend lineare und verzweigte, gesättigte und ungesättigte, cyclische und acyclische und substituierte und unsubstituierte Alkylgruppen, und worin Heteroatome entweder vorhanden oder nicht vorhanden sein können in der Alkylgruppe, (iii) eine Arylgruppe, beinhaltend substituierte und unsubstituierte Arylgruppen, und worin Heteroatome entweder vorhanden oder nicht vorhanden sein können in der Arylgruppe, (iv) eine Arylalkylgruppe, beinhaltend substituierte und unsubstituierte Arylalkylgruppen, worin der Alkylteil der Arylalkylgruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Arylalkylgruppe oder (v) eine Alkylarylgruppe, beinhaltend substituierte und unsubstituierte Alkylarylgruppen, worin der Alkylteil der Alkylarylgruppe linear oder verzweigt, gesättigt oder ungesättigt und cyclisch oder acyclisch sein kann und worin Heteroatome entweder vorhanden oder nicht vorhanden sein können in entweder dem Aryl- oder dem Alkylteil der Alkylarylgruppe.

6. Das Verfahren der Ansprüche 1 bis 5, worin das Gelierungsmittel eine Mischung aus 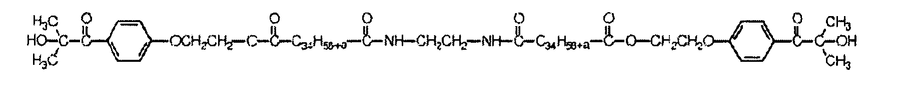 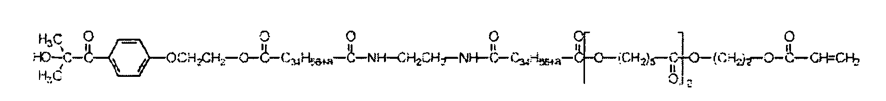 und 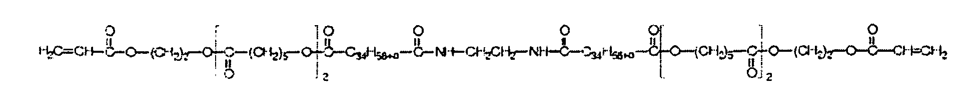 ist, worin -C₃₄H₅₆₊ₐ- eine verzweigte Alkylengruppe, welche Ungesättigtheiten und cyclische Gruppen beinhalten oder nicht beinhalten kann, substituierte und unsubstituierte Alkylengruppen bedeutet und worin Heteroatome in der Alkylengruppe entweder vorhanden oder nicht vorhanden sein können, worin a eine ganze Zahl von 0, 1, 2, 3, 4, 5, 6, 7, 8, 9, 10, 11 oder 12 ist.

7. Das Verfahren gemäß einem der Ansprüche 1 bis 6, worin der Code ein Barcode oder ein Code im Stile des Data Matrix Codes ist.

8. Das Verfahren gemäß einem der Ansprüche 1 bis 6, worin der Code ein binärer Barcode ist.

9. Maschinenlesbarer Code, umfassend ein Set von gedruckten Markierungen, die mit einer ultraviolett aushärtbaren Phasenwechseltinte erzeugt wurden, welche einen optionalen Farbstoff und ein Phasenwechseltintenvehikel, umfassend ein durch Strahlung härtbares Monomer oder Präpolymer; einen Fotoinitiator; ein reaktives Wachs; und ein Gelierungsmittel umfasst; worin jede gedruckte Markierung des Sets eine vorbestimmte Druckhöhe auf einem Substrat aufweist und einen vorbestimmten Datenwert bedeutet, worin das Set an gedruckten Markierungen gedruckte Markierungen beinhaltet, die unterschiedliche Datenwerte bedeuten und unterschiedliche Druckhöhen aufweisen.

10. Substrat mit einen maschinenlesbaren Code darauf, worin der Code ein Set von gedruckten Markierungen umfasst, die mit einer ultraviolett aushärtbaren Phasenwechseltinte erzeugt wurde, welche einen optionalen Farbstoff und ein Phasenwechseltintenvehikel, umfassend ein durch Strahlung härtbares Monomer oder Präpolymer; einen Fotoinitiator; ein reaktives Wachs und ein Gelierungsmittel umfasst; worin jede gedruckte Markierung des Sets eine vorbestimmte Höhe auf einem Substrat aufweist und einen vorbestimmten Datenwert bedeutet, worin gedruckte Markierungen mit der gleichen vorbestimmten Höhe einen gleichen Datenwert bedeuten und worin gedruckte Markierungen, die unterschiedliche Datenwerte bedeuten, unterschiedliche Höhen aufweisen.

11. Das Substrat gemäß Anspruch 10, worin das Substrat Aluminiumfolie, Polyesterfilm oder Polypropylenfilm umfasst.

12. Das Substrat gemäß Anspruch 10 oder 11, worin die Markierungen aus im Wesentlichen farbloser Tinte gebildet sind.

13. Das Substrat gemäß einem der Ansprüche 10 bis 12, worin das Gelierungsmittel eine Mischung aus 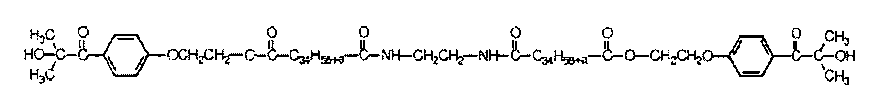 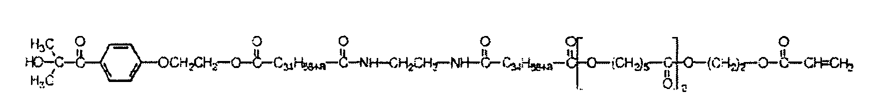 und 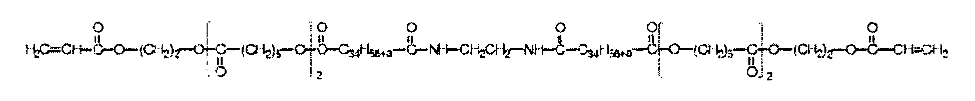 ist, worin -C₃₄H₅₆₊ₐ- eine verzweigte Alkylengruppe, welche Ungesättigtheiten und cyclische Gruppen beinhalten oder nicht beinhalten kann, substituierte und unsubstituierte Alkylengruppen bedeutet und worin Heteroatome in der Alkylengruppe entweder vorhanden oder nicht vorhanden sein können, worin a eine ganze Zahl von 0, 1, 2, 3, 4, 5, 6, 7, 8, 9, 10, 11 oder 12 ist.

14. System zum Einbetten und Wiederherstellen von Information auf einem Substrat, umfassend:
eine bildgebende Vorrichtung, enthaltend mindestens ein Markierungsmaterial, welches eine ultraviolett aushärtbare Phasenwechseltinte umfasst, die Phasenwechseltinte einen optionalen Farbstoff und ein Phasenwechseltintenvehikel, umfassend ein strahlungshärtbares Monomer oder Präpolymer; einen Fotoinitiator; ein reaktives Wachs; und ein Gelierungsmittel umfasst, worin die bildgebende Vorrichtung Daten erhält, die der Information entsprechen, um einen maschinenlesbaren Code in Übereinstimmung mit Anspruch 9 zu bilden auf einem bildaufnehmenden Substrat, und ein Bild, beinhaltend den maschinenlesbaren Code auf dem bildaufnehmenden Substrat mit dem mindestens einen Markierungsmaterial, ausbildet; und
ein Dokument-lesende Vorrichtung, umfassend ein Lesegerät, welches die Unterschiede in der Höhe zwischen den unterschiedlichen gedruckten Markierungen des maschinenlesbaren Codes detektiert.

15. Das System gemäß Anspruch 14, worin die bildgebende Vorrichtung eine Tintenstrahlvorrichtung ist.

## Revendications

1. Procédé d'intégration d'informations sur un substrat comprenant :
la conversion d'informations en un code lisible par une machine, dans lequel le code comprend un ensemble de marquages imprimés prévus, dans lequel chaque marquage imprimé prévu de l'ensemble a une hauteur prédéterminée sur un substrat et représente une valeur prédéterminée, dans lequel des marquages imprimés prévus ayant une même hauteur prédéterminée représentent une même valeur de données, et dans lequel des marquages imprimés prévus représentant des valeurs de données différentes ont des hauteurs différentes ; et
l'impression du code lisible par une machine sur le substrat en déposant une encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; et un gélifiant et en durcissant l'encre déposée, de sorte que chacun des marquages imprimés prévus est imprimé de façon à avoir la hauteur prédéterminée.

2. Procédé selon la revendication 1, dans lequel l'au moins un monomère ou prépolymère durcissable est un composé acrylate ou méthacrylate multifonctionnel.

3. Procédé selon la revendication 2, dans lequel le composé acrylate ou méthacrylate multifonctionnel est un diacrylate de néopentyl glycol propoxylé, un tétraacrylate de pentaérythritol, un tétraméthacrylate de pentaérythritol, un diacrylate de 1,2-éthylène glycol, un diméthacrylate de 1,2-éthylène glycol, un diacrylate de 1,6-hexanediol, un diméthacrylate de 1,6-hexanediol, un diacrylate de 1,12-dodécanol, un diméthacrylate de 1,12-dodécanol, un isocyanurate triacrylate de tris(2-hydroxy éthyle), un diacrylate d'hexanediol, un diacrylate de tripropylène glycol, un diacrylate de dipropylène glycol, un acrylate de polyéther modifié avec une amine, un triacrylate de triméthylolpropane, un propoxylate triacrylate de glycérol, un pentaacrylate de dipentaérythritol, un hexaacrylate de dipentaérythritol, un tétraacrylate de pentaérythritol éthoxylé, ou des mélanges ou combinaisons de ceux-ci.

4. Procédé selon l'une quelconque des revendications 1 à 3, dans lequel la cire réactive est une cire de polyéthylène terminé par un hydroxyle fonctionnalisé avec groupe polymérisable.

5. Procédé selon l'une quelconque des revendications 1 à 4, dans lequel le gélifiant est un composé de la formule 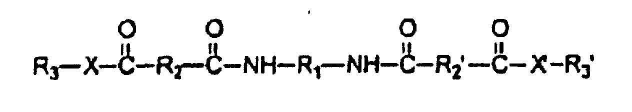 dans laquelle R₁ est (i) un groupe alkylène, incluant des groupes alkylène linéaires et ramifiés, saturés et insaturés, cycliques et acycliques, et substitués et non substitués, et dans lequel des hétéroatomes peuvent être ou non présents dans le groupe alkylène, (ii) un groupe arylène, incluant des groupes arylène substitués et non substitués, et dans lequel des hétéroatomes peuvent être ou non présents dans le groupe arylène, (iii) un groupe arylalkylène, incluant des groupes arylalkylène substitués et non substitués, dans lequel la partie alkyle du groupe arylalkylène peut être linéaire ou ramifiée, saturée ou insaturée, et cyclique ou acyclique, et dans lequel des hétéroatomes peuvent être ou non présents dans la partie aryle ou alkyle du groupe arylalkylène, ou (iv) un groupe alkylarylène, incluant des groupes alkylarylène substitués et non substitués, dans lequel la partie alkyle du groupe alkylarylène peut être linéaire ou ramifiée, saturée ou insaturée, et cyclique ou acyclique, et dans lequel des hétéroatomes peuvent être ou non présents dans la partie aryle ou alkyle du groupe alkylarylène ; R₂ et R₂', chacun indépendamment de l'autre, sont (i) des groupes alkylène, incluant des groupes alkylène linéaires et ramifiés, saturés et insaturés, cycliques et acycliques, et substitués et non substitués, et dans lesquels des hétéroatomes peuvent être ou non présents dans le groupe alkylène, (ii) des groupes arylène, incluant des groupes arylène substitués et non substitués, et dans lesquels des hétéroatomes peuvent être ou non présents dans le groupe arylène, (iii) des groupes arylalkylène, incluant des groupes arylalkylène substitués et non substitués, dans lesquels la partie alkyle du groupe arylalkylène peut être linéaire ou ramifiée, saturée ou insaturée, et cyclique ou acyclique, et dans lesquels des hétéroatomes peuvent être ou non présents dans la partie aryle ou alkyle du groupe arylalkylène, ou (iv) des groupes alkylarylène, incluant des groupes alkylarylène substitués et non substitués, dans lesquels la partie alkyle du groupe alkylarylène peut être linéaire ou ramifiée, saturée ou insaturée, et cyclique ou acyclique, et dans lesquels des hétéroatomes peuvent être ou non présents dans la partie aryle ou alkyle du groupe alkylarylène ; R₃ et R₃', chacun indépendamment de l'autre, sont soit (a) des groupes de photoinitiation, soit (b) des groupes qui sont (i) des groupes alkyle, incluant des groupes alkyle linéaires et ramifiés, saturés et insaturés, cycliques et acycliques, et substitués et non substitués, et dans lesquels des hétéroatomes peuvent être ou non présents dans le groupe alkyle, (ii) des groupes aryle, incluant des groupes aryle substitués et non substitués, dans lesquels des hétéroatomes peuvent être ou non présents dans le groupe aryle, (iii) des groupes arylalkyle, incluant des groupes arylalkyle substitués et non substitués, dans lesquels la partie alkyle du groupe arylalkyle peut être linéaire ou ramifiée, saturée ou insaturée, et cyclique ou acyclique, et dans lesquels des hétéroatomes peuvent être ou non présents dans la partie aryle ou alkyle du groupe arylalkyle, ou (iv) des groupes alkylaryle, incluant des groupes alkylaryle substitués et non substitués, dans lesquels la partie alkyle du groupe alkylaryle peut être linéaire ou ramifiée, saturée ou insaturée, et cyclique ou acyclique, et dans lequel des hétéroatomes peuvent être ou non présents dans la partie aryle ou alkyle du groupe alkylaryle ; et X et X', chacun indépendamment de l'autre, est un atome d'oxygène ou un groupe de la formule -NR₄-, dans laquelle R₄ est (i) un atome d'hydrogène, (ii) un groupe alkyle, incluant des groupes alkyle linéaires et ramifiés, saturés et insaturés, cycliques et acycliques, et substitués et non substitués, et dans lequel des hétéroatomes peuvent être ou non présents dans le groupe alkyle, (iii) un groupe aryle, incluant des groupes aryle substitués et non substitués, et dans lequel des hétéroatomes peuvent être ou non présents dans le groupe aryle, (iv) un groupe arylalkyle, incluant des groupes arylalkyle substitués et non substitués, dans lequel la partie alkyle du groupe arylalkyle peut être linéaire ou ramifiée, saturée ou insaturée, et cyclique ou acyclique, et dans lequel des hétéroatomes peuvent être ou non présents dans la partie aryle ou alkyle du groupe arylalkyle, ou (v) un groupe alkylaryle, incluant des groupes alkylaryle substitués et non substitués, dans lequel la partie alkyle du groupe alkylaryle peut être linéaire ou ramifiée, saturée ou insaturée, et cyclique ou acyclique, et dans lequel des hétéroatomes peuvent être ou non présents dans la partie aryle ou alkyle du groupe alkylaryle.

6. Procédé selon l'une quelconque des revendications 1 à 5, dans lequel le gélifiant est un mélange de 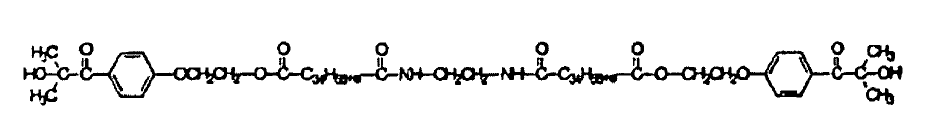 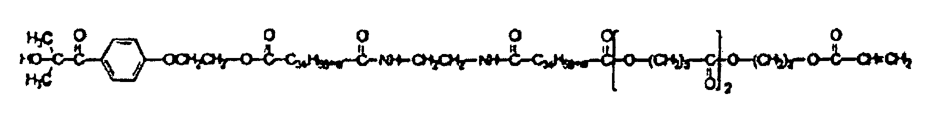 et 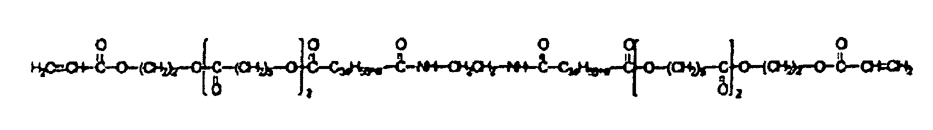 dans lesquelles -C₃₄H₅₆₊ₐ- représente un groupe alkylène ramifié, qui peut inclure ou non des insaturations et des groupes cycliques, des groupes alkylène substitués et non substitués, et dans lequel des hétéroatomes peuvent être ou non présents dans le groupe alkylène, dans lequel a est un entier de 0, 1, 2, 3, 4, 5, 6, 7, 8, 9, 10, 11, ou 12.

7. Procédé selon l'une quelconque des revendications 1 à 6, dans lequel le code est un code à barres ou un code de style Datamatrix.

8. Procédé selon l'une quelconque des revendications 1 à 6, dans lequel le code est un code à barres binaire.

9. Code lisible par une machine comprenant un ensemble de marquages imprimés créés avec une encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; et un gélifiant ; dans lequel chaque marquage imprimé de l'ensemble a une hauteur d'impression prédéterminée sur un substrat et représente une valeur de données prédéterminée, dans lequel l'ensemble de marquages imprimés inclut des marquages imprimés représentant une valeur de données différente et ayant des hauteurs d'impression différentes.

10. Substrat ayant un code lisible par une machine sur celui-ci, dans lequel le code comprend un ensemble de marquages imprimés créés avec une encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; et un gélifiant ; dans lequel chaque marquage imprimé de l'ensemble a une hauteur prédéterminée sur un substrat et représente une valeur de données prédéterminée, dans lequel des marquages imprimés ayant une même hauteur prédéterminée représentent une même valeur de données, et dans lequel des marquages imprimés représentant des valeurs de données différentes ont des hauteurs différentes.

11. Substrat selon la revendication 10, dans lequel le substrat comprend une feuille d'aluminium, un film de polyester, ou un film de polypropylène.

12. Substrat selon la revendication 10 ou 11, dans lequel les marquages sont formés à partir d'une encre sensiblement incolore.

13. Substrat selon l'une quelconque des revendications 10 à 12, dans le gélifiant est un mélange de 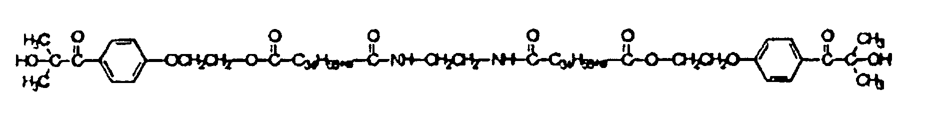 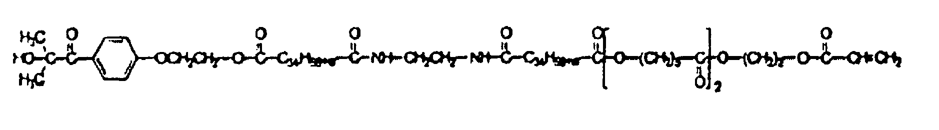 et 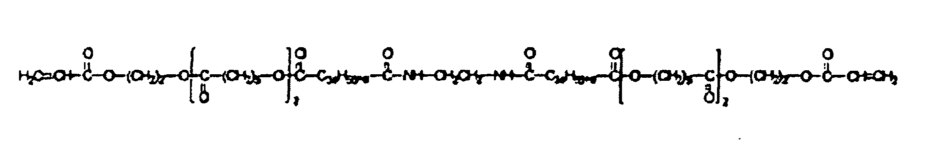 dans lesquelles -C₃₄H₅₆₊ₐ- représente un groupe alkylène ramifié, qui peut inclure ou non des insaturations et des groupes cycliques, des groupes alkylène substitués et non substitués, et dans lequel des hétéroatomes peuvent être ou non présents dans le groupe alkylène, dans lequel a est un entier de 0, 1, 2, 3, 4, 5, 6, 7, 8, 9, 10, 11, ou 12.

14. Système d'intégration et de récupération d'informations sur un substrat comprenant :
un dispositif de formation d'images contenant au moins une matière de marquage comprenant une encre à changement de phase durcissable aux ultraviolets comprenant une matière colorante facultative et un véhicule d'encre à changement de phase comprenant un monomère ou un prépolymère durcissable par un rayonnement ; un photoinitiateur ; une cire réactive ; et un gélifiant, dans lequel le dispositif de formation d'images reçoit des données, correspondant aux informations, pour former un code lisible par une machine selon la revendication 9, sur un substrat de réception d'images, et forme une image incluant le code lisible par une machine sur le substrat de réception d'images avec l'au moins une matière de marquage ; et
un dispositif de lecture de documents comprenant un lecteur qui détecte les différences de hauteur entre les différents marquages imprimés du code lisible par une machine.

15. Système selon la revendication 14, dans lequel le dispositif de formation d'images est un dispositif à jet d'encre.
